(19) **Europäisches Patentamt / European Patent Office / Office européen des brevets**

(11) **EP 1 385 275 B1**

(12) **EUROPEAN PATENT SPECIFICATION**

(45) Date of publication and mention
of the grant of the patent:
**30.05.2012 Bulletin 2012/22**

(51) Int Cl.:
***H04W 52/32*** *(2009.01)*    *H04W 52/14* *(2009.01)*
***H04W 52/48*** *(2009.01)*

(21) Application number: **03016518.7**

(22) Date of filing: **22.07.2003**

(54) **Method of deciding transmit power level in a mobile communications system**

Verfahren zur Bestimmung der Sendeleistungspegel in einem Mobilkommunikationssystem

Procédé de décision sur le niveau de puissance émise dans un système de communication sans fil

(84) Designated Contracting States:
**DE GB**

(30) Priority: **23.07.2002 JP 2002214282**

(43) Date of publication of application:
**28.01.2004 Bulletin 2004/05**

(73) Proprietor: **NTT DoCoMo, Inc.
Tokyo (JP)**

(72) Inventors:
• **Ishiguro, Takayuki,
Intell. Property Department
Chiyoda-ku,
Tokyo (JP)**
• **Ishii, Hiroyuki,
Intell. Property Department
Chiyoda-ku,
Tokyo (JP)**

(74) Representative: **HOFFMANN EITLE
Patent- und Rechtsanwälte
Arabellastraße 4
81925 München (DE)**

(56) References cited:
**WO-A1-98/58461     WO-A2-01/80575**

• **SIEMENS: "Power control for HS-SCCH and HS-SICH in TDD" 3GPP DRAFT; R1-02-0293 (POWER CONTROL FOR HS-SCCH AND HS-SICH IN TDD), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Orlando, USA; 20020215, 15 February 2002 (2002-02-15), XP050095873 [retrieved on 2002-02-15]**

**Description**

CROSS-REFERENCE TO RELATED APPLICATION

This application is based upon and claims the benefit of priority from the prior Japanese Patent Application No. 2002-214282, filed on July 23, 2002.

BACKGROUND OF THE INVENTION

1. Field of the Invention

This invention relates to a method of deciding a transmit power level in a mobile communications system, a wireless terminal, a base station and a mobile communications system.

2. Description of the Related Art

In WO 98/58461 there are described methods of controlling the power levels of transmitted signals in telecommunication systems. A user may be assigned a plurality of radio bearers associated with a plurality of physical channels for communicating with a radio communication system. A fast power control loop monitors a reference channel, and transmit power is adjusted in accordance with an SIR target value. Further, a plurality of slow power control loops adjust the SIR target value and also provide offset transmit power values associated with each physical channel to adapt the transmit powers in accordance with varying quality requirements between radio bearers.

Further, an ARQ (Automatic Repeat reQuest) system is employed as an error correcting system in IMT-2000 CDMA-TDD HSDPA (High Speed Downlink Packet Access).

In the ARQ system, a base station sends downlink data signals to wireless terminals. Respective wireless terminals returns to the base station ACK (ACKnowledgement) information in uplink control signals when it has correctly received the downlink data signals, whereas respective wireless terminals returns to the base station NACK (Negative ACKnowledgement) information in the uplink control signals when it could not receive the downlink data signals correctly.

The base station sends to a wireless terminal the next downlink data signal when it receives the uplink control signals and recognizes having received ACK from one of the wireless terminals, whereas it sends to a wireless terminal the same downlink data signal with the previous downlink data signal when it recognizes having received NACK from one of the wireless terminals.

Thermal noises, fading and interference errors with other users tend to occur on wireless signals. Therefore, there may occur a case where a base station incorrectly recognizes having received NACK in an uplink control signal from a wireless terminal even though the wireless terminal has correctly received the downlink data signal and sent ACK in the uplink control signal to the base station. In that case, the base station re-sends the same downlink data signal to the wireless terminal. A sequential number is assigned to each downlink data signal, and the wireless terminal can recognize whether or not it has received the same downlink data signal according to the sequential number assigned thereto. When the wireless terminal recognizes having received the same downlink data signal, it abandons the received downlink data signal in order to avoid duplicate reception of the same downlink data signal.

Contrarily, there may occur the opposite case where a base station incorrectly recognizes having received ACK in an uplink control signal from a wireless terminal even though the wireless terminal could not receive a downlink data signal correctly and sent NACK in the uplink control signal to the base station. In such a case, the base station recognizes that the wireless terminal has correctly received the downlink data signal, and it sends the next downlink data signal to the wireless terminal. Then, the wireless terminal results in loss of the downlink data signal that was not received correctly. In this latter case, the wireless terminal itself can not recover the loss of the necessary downlink data signal. Consequently, a higher layer of the protocol stack judges the necessity for the lost data and activates a retransmission procedure for the receive-failed downlink data signal. This recovery procedure causes problems of delay of communications and increase of error-rate.

In order to solve above mentioned problems, a method is proposed in a paper "Radio Access Network Physical Layer Procedures (TDD) (Release 5)", 3GPP TS 25.224 V5.0.0 (2002-03). This method features a transmit power level of an uplink control signal containing NACK information being set higher by $P_{offset}$ than a transmit power level of an uplink control signal containing ACK information. The principle of this method is as below.

The transmit power level of the uplink control signal for informing ACK $P_{ACK}$ can be calculated by an expression (1) from a propagation damping value $L_{P\text{-}CCPCH,}$ which is available from P-CCPCH, and a power of signal $PRX_{des}$, which is required by a wireless terminal for correct reception of the signal.

$$P_{ACK} = L_{P\text{-}CCPCH} + PRX_{des} \quad (1)$$

The transmit power level of the uplink control signal containing NACK information $P_{NACK}$ can be calculated by an expression (2).

$$P_{NACK} = P_{ACK} + P_{offset} \quad (2)$$

A method for deciding the $P_{offset}$ is proposed in a paper "Power control for HS-SCCH and HS-SICH in TDD", 3GPP Tdoc R1-02-0293. This method features to decide the $P_{offset}$ based on CQI (Channel Quality Indicator) that is information for deciding a quality of the downlink data signal.

However, there is a problem in that the proposed method can not decide the best fitting transmit power level $P_{offset}$ because the method measures the quality of a downlink time slot defined in the IMT-2000 CDMA TDD and this slot is different from an uplink time slot provided for transmitting the uplink control signal.

Additionally, in a case where the base station sends downlink data signals to a plurality of wireless terminals, respectively, and respective wireless terminal sends uplink control signals in the same time slot, interferences occur between the uplink control signals which are sent from respective wireless terminals in the same time slot. Because of these interferences, there occurs another problem in that the quality of received signals in the base station changes according to the number of wireless terminals that send the uplink control signals simultaneously, and that the best $P_{offset}$ also tends to change.

SUMMARY OF THE INVENTION

An object of the present invention is to provide a new technique of deciding a transmit power level of wireless signals that can restrain degradation of a quality of uplink control signal being received by a base station. The object can be achieved by arranging a wireless terminal to detect errors of the uplink control signal and the base station to decide the transmit power level of the uplink control signals containing NACK according to the detected errors of the uplink control signals.

The first aspect of the present invention is a method of deciding a transmit power level carried out by a wireless terminal in a mobile communications system comprising the steps of claim 1.

In this first aspect of the present invention, it is possible to arrange the wireless terminal to increase the transmit power level of the uplink control signal when the quality of the uplink control signal for informing a failure of receipt of a downlink data signal from a base station is estimated as being degraded, and the wireless terminal to decrease the transmit power level of the uplink control signal when the quality of the uplink control signal for informing a successful receipt of the downlink data signal from the base station is estimated as being degraded. It is also possible to arrange the wireless terminal to estimate the quality of the uplink control signal according to a content of the downlink data signal from the base station.

In the first aspect of the present invention, it is also possible to arrange the wireless terminal to decide that the quality of the uplink control signal for informing a correct receipt of the downlink data signal is degraded, when the wireless terminal receives the downlink data signal of informing the same message as that which was previously received, after sending the uplink control signal for informing a correct receipt of the downlink data signal which was previously received.

In the first aspect of the present invention, it is also possible to arrange the wireless terminal to decide that the quality of the uplink control signal for informing an incorrect receipt of the downlink data signal is degraded, when the wireless terminal receives the downlink data signal informing a different massage from that which was previously received, after sending the uplink control signal for informing an incorrect receipt of the downlink data signal which was previously received.

In the first aspect of the present invention, it is further possible to arrange the transmit power level of the uplink control signal to be a transmit power level of an uplink control signal for informing an incorrect receipt of the downlink data signal.

According to the first aspect of the present invention, in the mobile communications system including wireless terminals and a base station, respective wireless terminals estimates the quality of the uplink control signal and, according to the estimated quality of the uplink control signal, decides the transmit power level of the uplink control signal for wireless communications between the wireless terminal and the base station. Consequently, it can restrain degradation of the quality of the uplink control signals, and withhold increase of the number of signal processings required in the base station for adjustment of the transmit power level of the uplink control signals.

The second aspect of the present invention is a method of deciding a transmit power level in a mobile communications system having the features of claim 2 in which the system includes a plurality of wireless terminals and a base station, comprising the steps of: (a) a step that the plurality of wireless terminals estimate a quality of an uplink control signal, respectively; (b) a step that the plurality of wireless terminals inform a degradation of the uplink control signal to the base station when they have estimated the degradation thereof, respectively; (c) a step that the base station decides to increase the transmit power level of the uplink control signal from one of the plurality of wireless terminals when the base station receives from one of the plurality of wireless terminals an information that the quality of the uplink control signal for informing an incorrect receipt of a downlink data signal is degraded, whereas the base station decides to decrease the transmit power level of the uplink control signal from one of the plurality of wireless terminals when the base station receives from one of the plurality of wireless terminals an information that the quality of the uplink control signal for informing a correct receipt of the downlink data signal is degraded; and (d) a step that the base station sends an indication value of the decided transmit power level of the uplink control signal to all of the plurality of wireless terminals.

According to the second aspect of the present invention, in the mobile communications system including the wireless terminals and the base station, a respective wireless terminal estimates the quality of the uplink control signal and informs the base station of the respective estimated qualities. The base station judges the respective estimated qualities of the uplink control signals from a respective wireless terminal, and where necessary, the base station indicates the adequate transmit power level to all wireless terminals. Consequently, respective wireless terminals can adequately carry out wireless communications with the base station by merely controlling the transmit power level of the uplink control signal so as to agree with the indicated transmit power level.

The third aspect of the present invention is a wireless terminal comprising the features of claim 3.

In the third aspect of the present invention, it is possible to arrange the signal quality estimation means to estimate the quality of the uplink control signal for informing an incorrect receipt of a downlink data signal from a base station and the quality of the uplink control signal for informing a correct receipt of the downlink data signal; and the transmit power level deciding means to decide an increment in the transmit power level of the uplink control signal when the signal quality estimation means estimates that the quality of the uplink control signal for informing an incorrect receipt of the downlink data signal is degraded, and to decide a decrement in the transmit power level of the uplink control signal when the signal quality estimation means estimates that the quality of the uplink control signal for informing a correct receipt of the uplink control signal is degraded.

In the third aspect of the present invention, it is also possible to arrange the signal quality estimation means to estimate the quality of the uplink control signal according to the downlink data signal from the base station. It is also possible to arrange the signal quality estimation means to decide that the quality of the uplink control signal for informing a correct receipt of the downlink data signal is degraded in a case where the wireless terminal receives the downlink data signal informing the same massage as that which was previously received after the wireless terminal sent an uplink control signal for informing a correct receipt of the downlink data signal which was previously received. It is also possible to arrange the signal quality estimation means to decide that the quality of the plink control signal for informing an incorrect receipt of the downlink data signal is degraded in a case where the wireless terminal receives the downlink data signal informing a different message from that which was previously received after the wireless terminal sent an uplink control signal for informing an incorrect receipt of the downlink data signal which was previously received.

In the third aspect of the present invention, it is further possible to arrange the transmit power level of the uplink control signal to be a transmit power level of an uplink control signal for informing an incorrect receipt of a downlink data signal from a base station.

According to the third aspect of the present invention, in the mobile communications system including a wireless terminal and a base station, the wireless terminal solely estimates the quality of the uplink control signal and decides the transmit power level thereof. Consequently, the system can lessen the degradation of the receive quality of the uplink control signal and it can prevent increase of processes required to the base station for adjusting the transmit power level of the uplink control signal.

The fourth aspect of the present invention is a mobile communications system comprising the features of claim 9.

According to the fourth aspect of the present invention, in the mobile communications system including the wireless terminal and the base station, respective wireless terminals estimates the quality of the uplink control signals and informs the estimated quality thereof to the base station. The base station judges the quality of the uplink control signals from all the wireless terminals, and where necessary, indicates to all the wireless terminals an adequate transmit power level of the uplink control signals. Consequently, respective wireless terminals can adequately carry out wireless communications with the base station by merely controlling the transmit power level of the uplink control signals so as to agree with the indicated transmit power level.

**EP 1 385 275 B1**

BRIEF DESCRIPTION OF THE DRAWINGS

FIG. 1 is a schematic diagram showing a common hardware structure of all embodiments of a mobile communications system of the present invention.

FIG. 2 is a schematic diagram showing a functional structure of a wireless terminal used in a mobile communications system of an example explained for an understanding of the present invention.

FIG. 3 is a timing chart showing a relationship between communication frames and respective time slots in each communication frames, and transmit- and receive-timings of communication signals between a base station and wireless terminals.

FIG. 4 is a flowchart showing a transmit power control process carried out by a wireless terminal of the example explained with respect to Fig. 2.

FIG. 5 is a schematic diagram showing a functional structure of a wireless terminal used in a mobile communications system of the first embodiment of the present invention.

FIG. 6 is a schematic diagram showing a functional structure of a base station used in the mobile communications system of the first embodiment.

FIGs. 7A and 7B are flowcharts showing a transmit power control process carried out by the wireless terminal of the first embodiment.

FIG. 8 is a flowchart showing a transmit power level deciding process carried out by the base station of the first embodiment.

FIG. 9 is a sequence diagram showing a transmit power level deciding process carried out between the wireless terminal and the base station.

FIG. 10 is an error decision table of an uplink control signal that is referred by the base station of the first embodiment.

FIG. 11 is a schematic block diagram showing a functional structure of a base station used in a mobile communications system of the second embodiment of the present invention.

FIG. 12 is a flowchart of a transmit power level deciding process carried out by the base station of the second embodiment.

FIG. 13 is a data structure of an uplink control signal that is sent from the wireless terminal of the second embodiment.

FIG. 14 is a schematic block diagram showing a functional structure of a base station used in a mobile communications system of an example explained for an understanding of the present invention.

FIG. 15 is a flowchart of a transmit power level deciding process carried out by the base station of the example.

DETAILED DESCRIPTION OF THE PREFERED EMBODIMENTS OF THE PRESENT INVETION

Hereinafter, the present invention will be described with reference to the drawings.

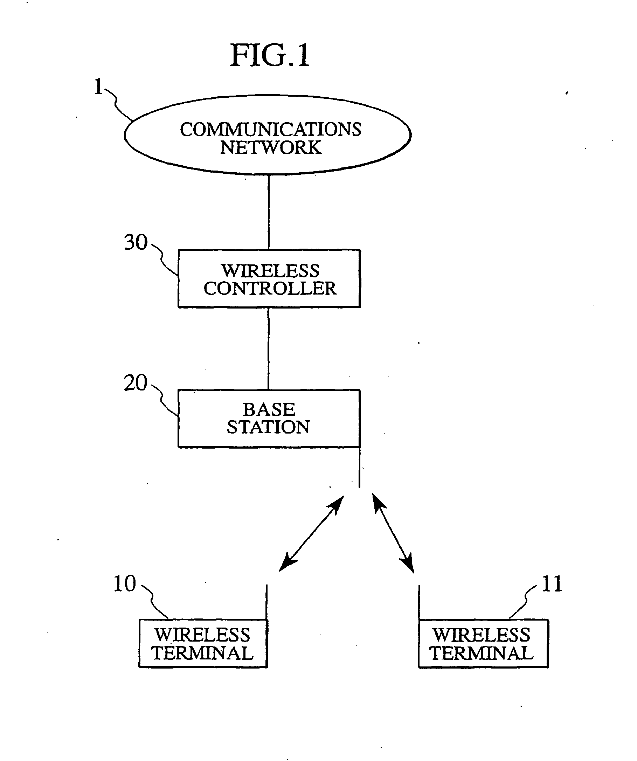

FIG. 1 illustrates a mobile communications system in accordance with an example explained for an understanding of the present invention. The mobile communication system includes wireless terminals 10 and 11 such as a cellular telephone, a PDA or the like which can wirelessly data-communicate. The mobile communications system also includes a base station 20 and a wireless controller 30. In this example, the mobile communication system is connected with a communications network 1 via the wireless controller 30.

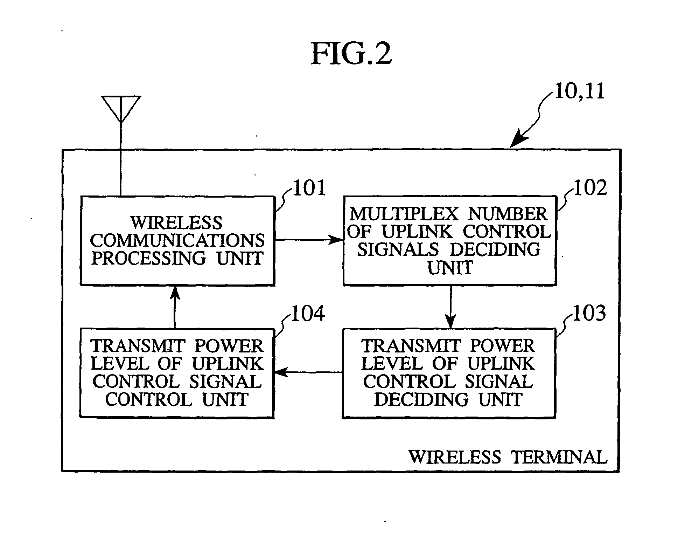

As shown in FIG. 2, respective wireless terminals 10 and 11 has a wireless communications processing unit 101, a multiplex number of uplink control signals deciding unit 102, a transmit power level of uplink control signals deciding unit 103 and a transmit power level of uplink control signals control unit 104. The wireless communications processing unit 101 wirelessly communicates with the base station 30. The multiplex number of uplink control signals deciding unit 102 decides the multiplex number of uplink control signals according to the multiplex number of downlink control signals received by the wireless communications processing unit 101. The transmit power level of uplink control signals deciding unit 103 judges whether to raise or lower the transmit power level of the uplink control signals according to the multiplex number of uplink control signals decided by the multiplex number of uplink control signals deciding unit 102. The transmit power level of uplink control signals control unit 104 controls a transmit power level of uplink control signals output from the wireless communications processing unit 101 according to an indication value given by the transmit power level of uplink control signals deciding unit 103.

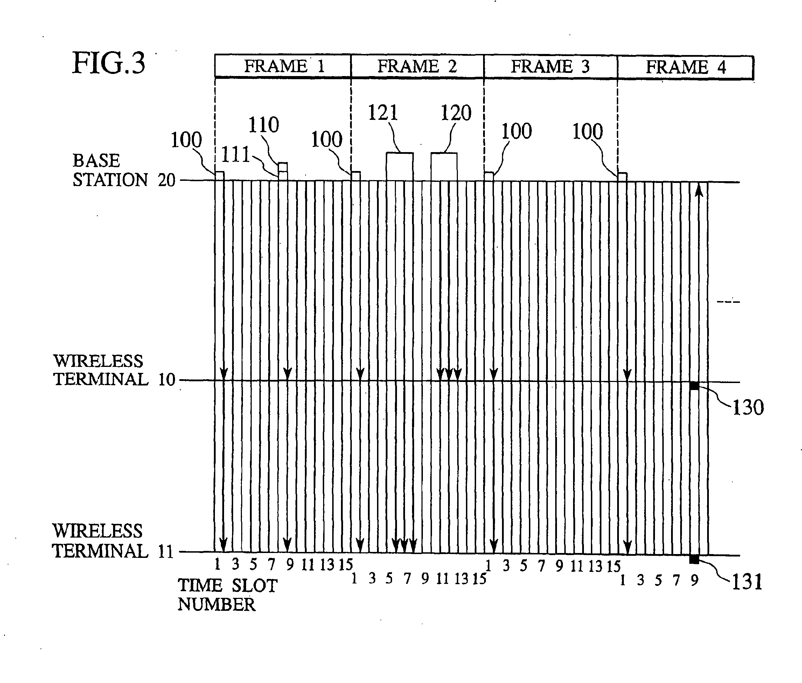

The wireless terminals 10 and 11 and the base station 20 wirelessly communicate each other on IMT-2000 CDMA-TDD (Code Division Multiple Access - Time Division Duplex) system. As shown in FIG.3, IMT-2000 CDMA-TDD system uses frames of 10ms length and fifteen time slots numbered 1 to 15 in each frame. The time slots numbered 1 to 15 are derived from each frame by dividing each frame into fifteen. In each time slot, downlink signals from the base station 20 to the wireless terminals 10 and 11 and uplink signals from the wireless terminals 10 and 11 to the base station 20 are defined. On the CDMA system, the base station 20 can simultaneously communicate with a plurality of wireless

5

terminals 10 and 11 in one time slot.

The wireless controller 30 defines uplink or downlink for each time slot. The wireless controller 30 also assigns the time slots for an annunciation signal 100, downlink control signals 110 and 111, uplink control signals 130 and 131, and downlink data signals 120 and 121. Here in FIG. 3, as an example, it is illustrated that the wireless controller 30 assigns the annunciation signal 100 to the time slot 1, the downlink control signals 110 and 111 to the time slot 8, the uplink control signals 130 and 131 to the time slot 9, and the downlink data signals 120 and 121 to the time slots 5 to 7 and 10 to 12.

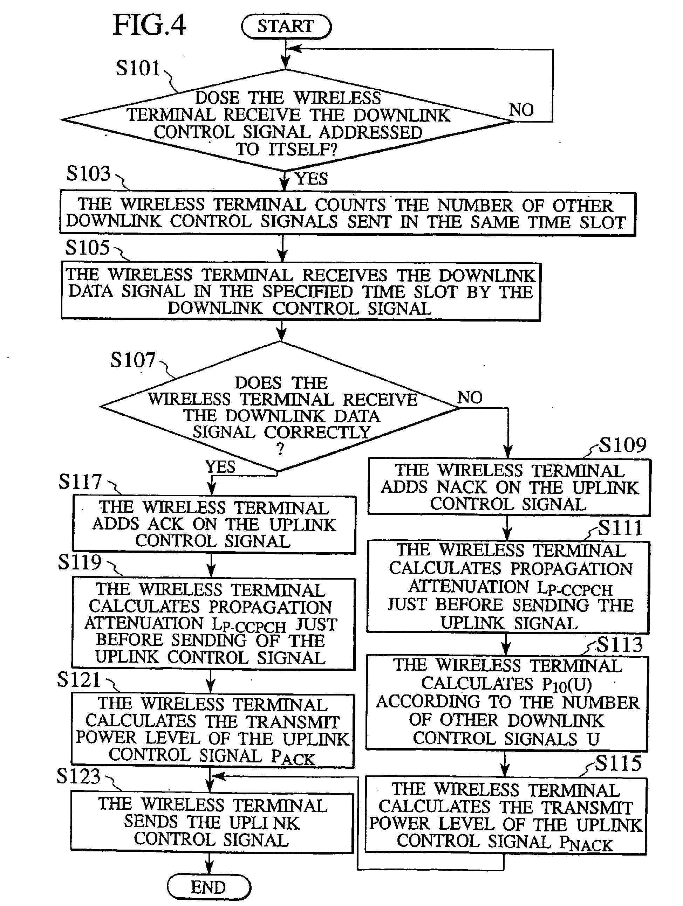

A transmit power level deciding method for the uplink control signals 130 carried out by each wireless terminal in this mobile communications system will be described with reference to a flowchart in FIG. 4.

A transmit power level of the uplink control signal 130 of the wireless terminal 10 is decided by processes according to the flowchart in FIG. 4. The wireless terminals 10 and 11 store an incremental transmit power level for NACK $P_{offset}$, a transmit power level $PTX_{P\text{-}CCPCH}$ of the annunciation signal 100 from the base station 20, a receive power level $PRX_{des}$ of the uplink control signals 130 and 131 that are necessary for the base station 20 to correctly receive therefrom. The wireless terminals 10 and 11 usually store constant values for these pieces of information in their memories. However, it is possible to arrange that the base station 20 sends these pieces of information in the annunciation signal 100, in the downlink control signals 110 and 111 or in the downlink data signals 120 and 121 to the wireless terminals 10 and 11, respectively, and that the wireless terminals 10 and 11 store the information into their memories.

The base station 20 transmits to the wireless terminals 10 and 11 the annunciation signal 100 in the time slot 1 of each frame. The base station 20 determines whether or not to send the downlink data signals 120 and 121 to the wireless terminals 10 and 11 according to whether or not the base station 20 has data to be sent to the wireless terminals 10 and 11. However, it is possible to arrange the base station to make this decision according to the degradation of quality of the wireless communications between the base station 20 and the wireless terminals 10 and 11. Measurement of the degree of degradation of the communications quality is carried out against the uplink control signals from the wireless terminals 10 and 11, which are previously received by the base station 20. Hereinafter, it is assumed that the base station 20 has determined to send the downlink data signals 120 and 121 to the wireless terminals 10 and 11.

The base station 20 firstly sends the downlink control signals to a wireless terminal, to which the downlink data signals were sent. Here, one downlink control signal 110 to the wireless terminal 10 and another downlink control signal 111 to the wireless terminal 11 are both sent in the same time slot 8 of the frame 1. The downlink control signal 110 includes information about the time slot number, in which the downlink data signal 120 is to be sent, and a division code and a modulation system used for the downlink control signal 120. The downlink control signal 111 includes information about the time slot number, in which the downlink data signal 121 is to be sent, and a division code and a modulation system used for the downlink control signal 121. Also here, it is assumed that the downlink control signal 110 indicates that the downlink data signal 120 is to be sent in the time slots 10, 11 and 12, and that the downlink control signal 111 indicates that the downlink data signal 121 is to be sent in the time slots 5, 6 and 7.

In the step S101 of the flowchart in FIG. 4, the wireless terminal 10 receives the downlink control signal 110 in the time slot 8 in the frame 1, and specifies that it will receive the downlink data signal 120 in the time slots 10, 11 and 12 of the frame 2, which are more than six time slots later from the time slot 8 of the frame 1.

In the step S103, the wireless terminal 10 counts a multiplex number U of downlink control signals, which are code-multiplexed in the same time slot. This counting is carried out according to a received midamble, which is provided for channel estimation of the downlink control signal 110. The wireless terminal 10, here, counts the multiplex number U is one (U=1) because the code-multiplexed downlink control signal with the downlink control signal 110 is only the downlink control signal 111.

In the step S105, the wireless terminal 10 receives the downlink data signal 120 in the time slots of the frame 2 specified according to the information of the downlink control signal 110.

In the step S107, the wireless terminal 10 judges whether or not it has correctly received the downlink data signal 120. If it was received erroneously, the wireless terminal 10 carries out a process of the step S109, and if it was received correctly, the wireless terminal 10 carries out a process of the step S117. In this case, the wireless terminal 10 is assumed to have erroneously received the downlink data signal 120.

In the step S109, the wireless terminal 10 adds NACK information in an uplink control signal 130.

In the step S111, the wireless terminal 10 calculates a propagation attenuation $L_{P\text{-}CCPCH,10}$ of the annunciation signal 100 of just before sending the uplink control signal 130. The calculation method of the propagation attenuation $L_{P\text{-}CCPCH,10}$ is as follows. First, the wireless terminal 10 calculates a receive power level $PRX_{P\text{-}CCPCH,10}$ of the annunciation signal 100 of just before sending the uplink control signal 130. The propagation attenuation $L_{P\text{-}CCPCH,10}$ of the annunciation signal 100 on the way from the base station 20 to the wireless terminal 10 can be described as the following expression (3).

$$L_{P-CCPCH,10} = PTX_{P-CCPCH} + PRX_{P-CCPCH,10} \quad (3)$$

In the step S113, the wireless terminal 10 calculates an increment in the power level $P_{10}(U)$. The $P_{10}(U)$ is a power value determined according to the number of code-multiplexed downlink control signals U, which was computed at the reception of the downlink control signal 110, and $P_{10}(U)$ is greater corresponding to the greatness of the multiplex number of downlink control signals. For instance, it is definable as the following expression (4).

$$P_{10}(U) = \alpha U \quad (4)$$

Here, $\alpha$ is a constant defined beforehand. A reference table that can define relationship between the number of downlink control signals U and $P_{10}(U)$ is stored in the memory of the wireless terminal 10. It is possible to arrange the base station 20 to send data of the reference table to the wireless terminal 10 beforehand.
In the step S115, the wireless terminal 10 determines the transmit power level $P_{NACK}$ of the uplink control signal 130 according to the following expression (5).

$$P_{NACK} = L_{P-CCPCH,10} + PRX_{des} + P_{offset} + P_{10}(U) \quad (5)$$

In the step S123, the wireless terminal 10 sends to the base station 20 the uplink control signal 130 by the transmit power level $P_{NACK}$ in the time slot 9 of the frame 4, which is more than 19 time slots later.
On the other hand, the wireless terminal 10 takes the following process when it could receive the downlink data signal 120 correctly in the step S107.
In the step S117, the wireless terminal 10 adds ACK information in the uplink control signal 130.
In the step S119, the wireless terminal 10 calculates a propagation attenuation $L_{P-CCPCH,10}$ of the annunciation signal 100 of just before sending the uplink control signal 130.
In the step S121, the wireless terminal 10 determines a transmit power level $P_{ACK}$ of the uplink control signal 130 according to the following expression (6).

$$P_{ACK} = L_{P-CCPCH,10} + PRX_{des} \quad (6)$$

In the step S123, the wireless terminal 10 sends to the base station 20 the uplink control signal 130 by the transmit power level PACK in the time slot 9 of the frame 4, which is more than 19 time slots later.
As set forth above, according to the mobile communications system of this example of the present invention, the wireless terminals 10 and 11 measure the multiplex number of downlink control signals, and determine the transmit power level of the uplink control signals containing NACK information according to the measured multiplex number. Since the multiplex number of uplink control signals results in to be equal to the multiplex number of corresponding downlink control signals that are previously received, the degree of the degradation of receive quality of uplink control signals can be lessened even when the multiplex number of uplink control signals increases.

[First Embodiment]

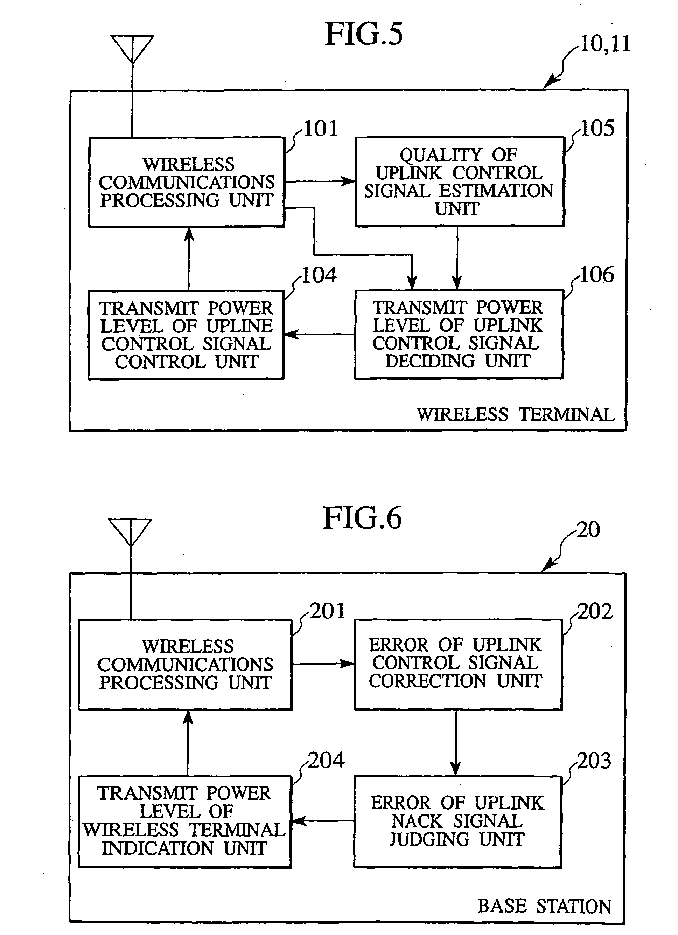

A mobile communications system in accordance with the first embodiment of the present invention will be described hereinafter. The schematic diagram of the first embodiment is the same as that of the example shown in FIG. 1. The feature of the first embodiment is that wireless terminals 10 and 11 estimate the quality of uplink control signals 130 and 131 according to the content of downlink data signals from a base station 20 and determine the transmit power level of the uplink control signals, and that the base station 20 detects the quality of the uplink control signals from the wireless terminals and indicates to the wireless terminals 10 and 11 an adjustment of transmit power level of the uplink control signals according to the detected quality of signal.
As shown in FIG. 5, respective wireless terminals 10 and 11 includes a wireless communications processing unit 101, a quality of uplink control signal estimation unit 105, a transmit power level of uplink control signals deciding unit 106, and a transmit power level of uplink control signals control unit 104. The wireless communications processing unit 101 carries out necessary wireless communications with the base station 20. The quality of uplink control signal estimation unit 105 estimates the quality of the uplink control signals 130 according to the content contained in downlink data signals, which are received by the wireless communications processing unit 101. The transmit power level of uplink control signals deciding unit 106 judges the necessity of an increment/decrement in the transmit power level of the uplink control signals according to the quality of the uplink control signals estimated by the quality of uplink control signal estimation unit 105. The transmit power level of uplink control signals control unit 104 controls the transmit power level of the uplink control signals 130 that are to be transmitted from the wireless communications processing unit 101.

As shown in FIG. 6, the base station 20 includes a wireless communications processing unit 201, an uplink control signal error correction unit 202, an uplink NACK signal error judging unit 203, and a transmit power level of wireless terminal indication unit 204. The wireless communications processing unit 201 carries out wireless communications with the wireless terminals 10 and 11. The uplink control signal error correction unit 202 detects and corrects errors in the uplink control signals received by the wireless communications processing unit 201. The uplink NACK signal error judging unit 203 judges errors in the uplink control signal that informs NACK message. The transmit power level of wireless terminal indication unit 204 decides whether the transmit power level of the uplink control signals from the wireless terminal 10 and 11 should be increased or decreased according to the judgment of the uplink NACK signal error judging unit 203, and indicates the wireless communications processing unit 201 to inform to all the wireless terminals 10 and 11 of increment or decrement in their transmit power level of the uplink control signals.

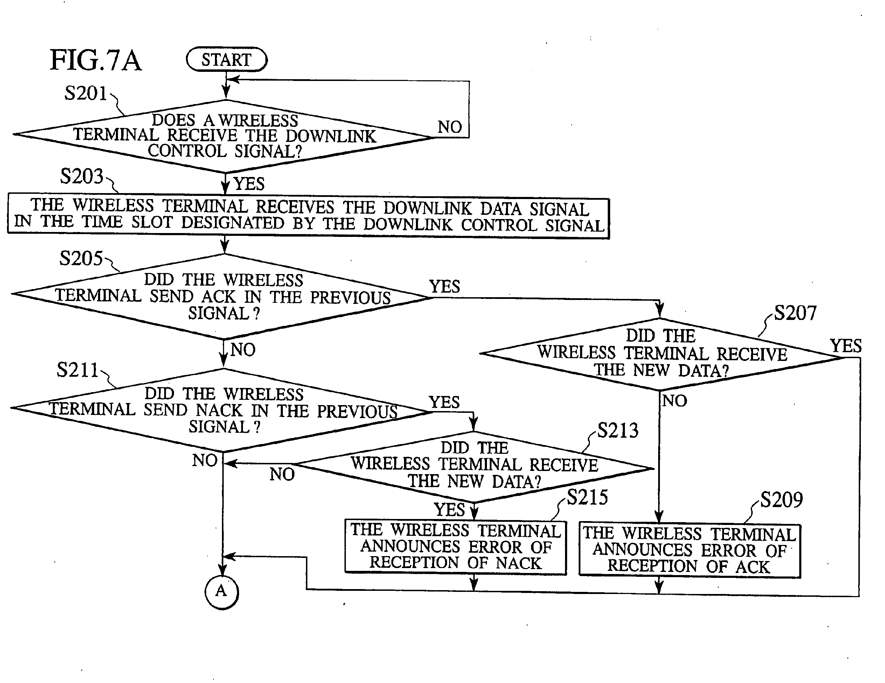

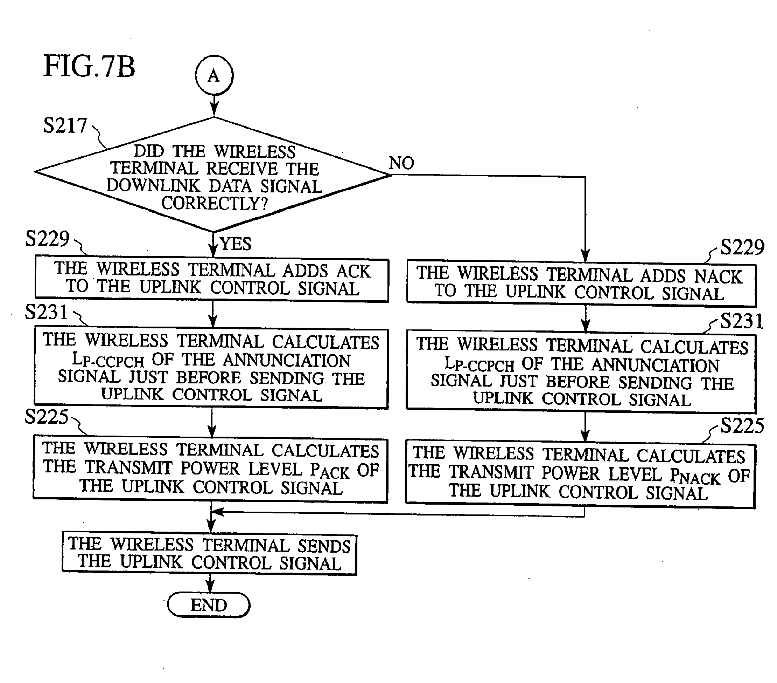

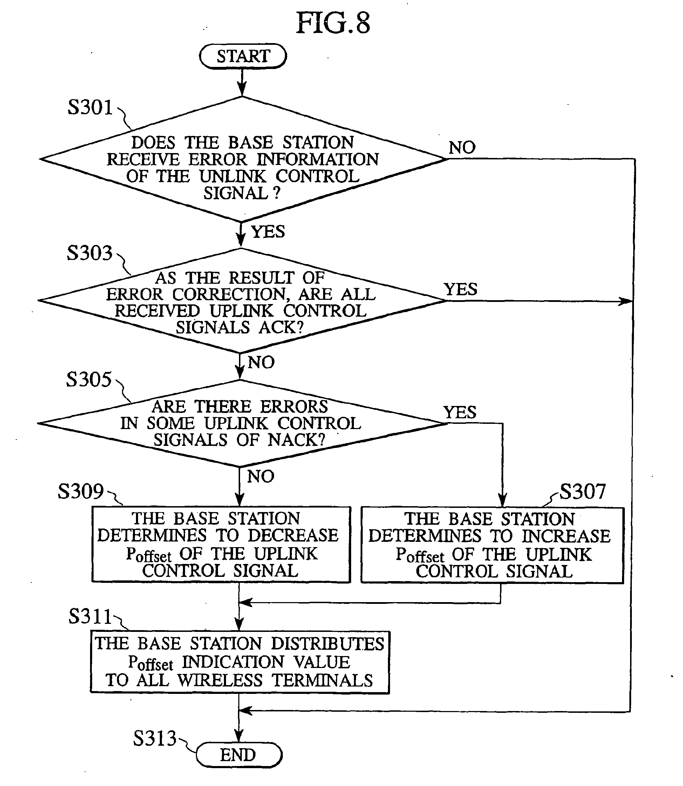

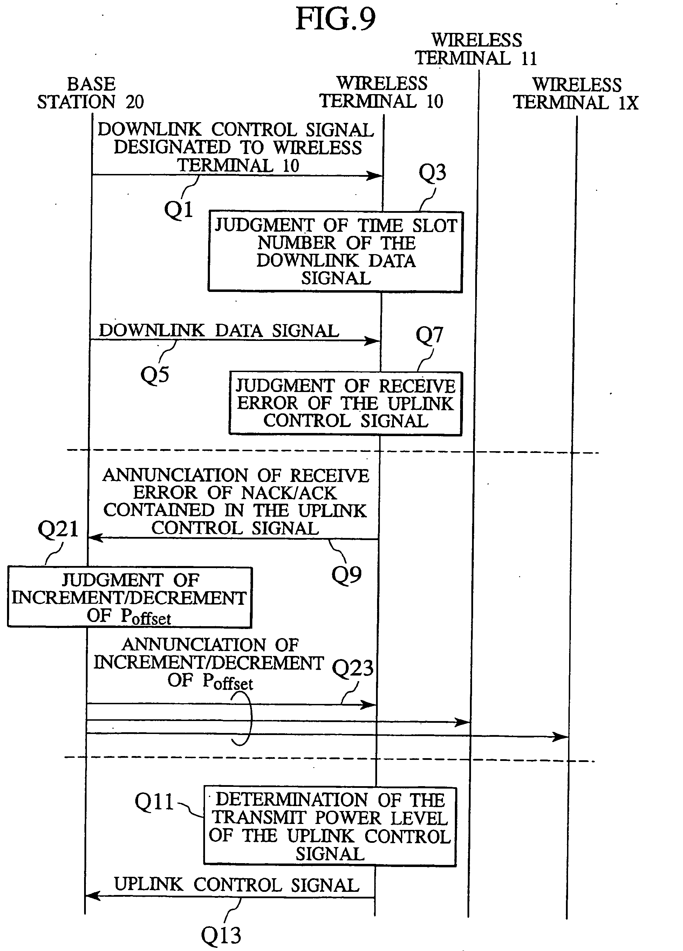

A transmit power level deciding method carried out by respective wireless terminals and the base station in the mobile communications system of the first embodiment will be described with reference to FIGs. 7-10 hereinafter. Flowcharts in FIGs. 7A and 7B illustrate processes carried out by respective wireless terminals 10 and 11, a flowchart in FIG. 8 illustrates processes carried out by the base station 20, and the sequence diagram in FIG. 9 illustrates cooperative processes between respective wireless terminals 10 and 11 and the base station 20.

It is assumed here that the wireless terminal 10 has previously received downlink data signals 120 from the base station 20, judged whether or not it could correctly receive the downlink data signals 120, and sent the uplink control signals 130 containing ACK or NACK information to the base station 20.

The wireless terminals 10 and 11 store a power increment for NACK $P_{offset}$. This power increment for NACK $P_{offset}$ is sent at periodical timing or arbitrary timing from the base station 20 in an annunciation signal 100, in downlink control signals 110 and 111, or in the downlink data signals 120 and 121, and the wireless terminals 10 and 11 store the power increment value for NACK in their memories. The wireless terminals 10 and 11 also store a transmit power level $PTX_{P\text{-}CCPCH}$ of the annunciation signal 100 from the base station 20 and a receive power level $PRX_{des}$ of the uplink control signals 130 and 131 to be received by the base station 20. These pieces of information are sent from the base station 20, and they are stored in memories of the wireless terminals 10 and 11.

The base station 20 sends to the wireless terminals 10 and 11 the annunciation signal 100 in the time slot 1 of each frame as shown in FIG. 3. The base station 20 judges whether or not to send the downlink data signals 120 and 121 to the wireless terminals 10 and 11. Here, the base station 20 has judged to send the downlink data signals 120 and 121 to the wireless terminals 10 and 11, respectively.

The base station 20 sends the downlink control signal 110 to the wireless terminal 10 and the downlink control signal 111 to the wireless terminal 11 in the time slot 8 of the frame 1. The downlink control signal 110 contains information of the downlink data signal 120 being sent in the time lots 10, 11 and 12, and the downlink control signal 111 contains information of the downlink data signal 121 being sent in the time slots 5, 6 and 7.

In the step S201 of the flowchart in FIGs. 7A and 7B, and also in the steps Q1 and Q3 in the sequence diagram in FIG. 9, the wireless terminal 10 receives the downlink control signal 110 in the time slot 8 of the frame 1, and recognizes to receive the downlink data signal 120 in the time slots 10, 11 and 12 of the frame 2, which are more than six time slots later from the time slot 8 of the frame 1.

In the step S203 and also in the step Q5, the wireless terminal 10 receives the downlink data signal 120.

In the step S205, the wireless terminal 10 determines to go to the step S207 when it sent ACK information on the uplink control signal 130 of the previous transmission, and otherwise, to go to the step S211. Here, the wireless terminal 10 is assumed to have sent the ACK information.

In the step S207, the wireless terminal 10 inspects and judges whether or not the content of the received downlink data signal 120 is that of sent for the first time from the base station 20. A method of judgment is carried out according to whether or not information that the content is sent for the first time by the base station 20 is written in the downlink data signal 120 or in the downlink control signal 110. When the content of the downlink data signal 120 is new, the wireless terminal determines to go to the step S217, and otherwise, to go to the step S209. Here, the wireless terminal 10 is assumed to have received the downlink data signal 120 containing the same content as the previous one.

The method of judgment set forth above can be substituted by a method as the following. Namely, the base station 20 assigns serial numbers to respectively different contents contained in the downlink data signals 120, which are to be sent consecutively from the base station 20, and writes a serial number into the downlink data signal 120 or into the downlink control signal 110 to be sent to the wireless terminal 10. Accordingly, the wireless terminal 10 can judge whether or not the received downlink data signal 120 contains new content according to the serial number written in the received downlink data signal 120.

In the step S209 and in the steps Q7 and Q9, since the wireless terminal 10 has not received the downlink data signal 120 containing new content though it previously sent the uplink control signal 130 containing ACK information, the wireless terminal 10 determines the previous uplink control signal 130 incorrect and sends information of incorrectness of the previous uplink control signal 130 to the base station 20. For this transmission of the information, the uplink control signal 130 or an uplink data signal can be used. In addition to the information of incorrectness of the uplink control signal 130, the wireless terminal 10 sends information of request for decrement in $P_{offset}$ to the base station 20.

At this step S209, it is also possible to arrange the wireless terminal 10 to decrease the value of $P_{offset}$ stored therein and not to send the information of incorrectness of the uplink control signal 130 to the base station 20. In this latter case, the process jumps from the step Q7 to the step Q11 in the sequence diagram of FIG. 9. Additionally, in the latter case, the transmit power level can be controlled solely from the wireless terminal side.

In the step S217, the wireless terminal 10 judges whether or not it has received the downlink data signal 120 correctly. In a case where it has incorrectly received the signal 120, the wireless terminal 10 determines to go to the step S210, and otherwise, to go to the step S227. Here, the wireless terminal 10 is assumed not to have received the downlink data signal 120 correctly.

In the step S219 and the step Q9, the wireless terminal 10 adds NACK information in the uplink control signal 130.

In the step S221, the wireless terminal 10 calculates a propagation attenuation $L_{P\text{-}CCPCH,10}$ of the annunciation signal 100 that is to be sent just before the uplink control signal 130. The method of calculation of the propagation attenuation $L_{P\text{-}CCPCH,10}$ is the same as that carried out in the step S111.

In the step S223 and in the step Q11, the wireless terminal 10 determines the transmit power level $P_{NACK}$ of the uplink control signal 130 as the following.

$$P_{NACK} = L_{P-CCPCH,10} + PRX_{des} + P_{offset} \quad (7)$$

In the step S225 and in the step Q13, the wireless terminal 10 sends the uplink control signal 130 by the power level of $P_{NACK}$ to the base station 20 in the time slot 9 of the frame 4, the time slot which is more than 19 time slots later.

Hereinafter, processes that the wireless terminal 10 carries out when it has sent NACK information by the previous uplink control signal 130 in the step S205 will be described.

In the step S211, the wireless terminal 10 determines to go to the step S213 when it sent NACK information by the previous uplink control signal 130, and otherwise, to go to the step S217. Here, the wireless terminal 10 is assumed to have sent NACK information by the previous uplink control signal 130.

In the step S213, the wireless terminal 10 judges whether or not the content contained in the received downlink data signal 120 is that which was sent by the base station for the first time to the wireless terminal 10. A method of judgment is the same with that of the step S207. If the content of the downlink data signal 120 is new, the wireless terminal determines to go to the step S215, and otherwise, to go to the step S217. Here, the content is assumed as being new.

In the step S215 and in the steps Q7 and Q9, the wireless terminal 10 judges the previous uplink control signal 130 was incorrect, because the wireless terminal 10 received the downlink data signal 120 containing new content even though it had previously sent an uplink control signal 130 containing NACK information previously. Then, the wireless terminal 10 sends information of incorrectness of the previous uplink control signal 130 to the base station 20. For a signal on which the information of incorrectness to be added, the uplink control signal 130 or the uplink data signal can be used. In addition to the information of incorrectness of the previous uplink control signal, information of request for increment in $P_{offset}$ is sent.

At this step S215, it is also possible to arrange the wireless terminal 10 to increase the value of $P_{offset}$ stored therein and not to send the information of incorrectness of the previous uplink control signal 130 to the base station 20. In this latter case, the process jumps from the step Q7 to the step Q11 in the sequence diagram in FIG. 9. Additionally, in the latter case, the transmit power level can be controlled solely by the wireless terminal side.

The flowchart in FIG. 8 illustrates processes carried out in the base station 20 for deciding an adequate transmit power level of the wireless terminals 10 and 11. In the step S301, the base station 20 goes to the step S303 when it receives information of incorrectness of the uplink control signal 130 that had been sent from one of the wireless terminals 10 and 11 in the step S209 or S215, and otherwise, it terminates the processes of the flowchart in FIG. 8. The information of incorrectness of the uplink control signal may be sent from different wireless terminals, respectively. Hereinafter, the base station 20 is assumed to have received information of incorrectness of the uplink control signal.

In the step S303, the base station 20 carries out error correction of ACK/NACK information contained in the incorrect uplink control signals. Thereafter, when it judges that all previous uplink control signals 130 and 131 contain ACK information, the base station 20 terminates the processes because $P_{offset}$ did not affect to the previous uplink control signals 130 and 131.

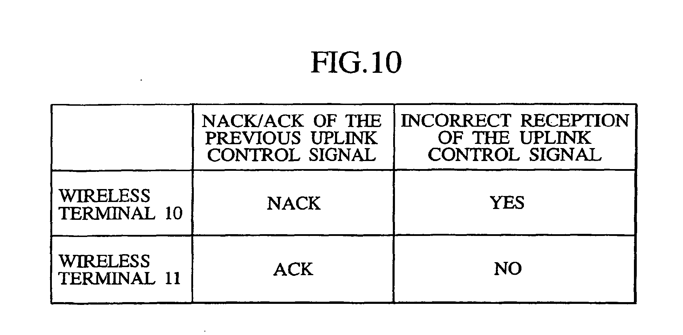

As the table in FIG. 10 illustrates, in a case where the base station 20 has received the previous uplink control signals 130 and 131 and judged to have received NACK from the wireless terminal 10 and ACK from the wireless terminal 11, and that the base station has received information of incorrectness of the uplink control signal 130 from the wireless terminal 10, the base station 20 terminates the processes because, as the result of error correction, it can conclude to have received ACK from both wireless terminals 10 and 11. In the other case, the base station goes to the step S305.

In the step S305, the base station 20 determines to go to the step S307 when at least one case of misjudging ACK as NACK exists, and otherwise, it goes to the step S307.

In the step S307 and in the step Q21, the base station 20 increases $P_{offset}$ by the predetermined value. To the contrary, in the step S309 and in the step Q21, the base station 20 decreases $P_{offset}$ by the predetermined value.

In the step S311 and the step Q23, the base station 20 sends $P_{offset}$ value to all wireless terminals 10 and 11. The base station 20 sends this information in the annunciation signal 100, in the downlink control signals 110 and 111, or in the downlink control signals 120 and 121. Each wireless terminal stores the received information in its memory.

In the step S305, it is possible to arrange the base station 20 to determine which of step S307 or S309 to go to according to the number of pieces of information of incorrect reception of NACK and the number of pieces of information of incorrect reception of ACK. For instance, it is possible to arrange the base station 20 to go to the step S307 when the number of pieces of information of incorrect reception of NACK is larger than that of incorrect reception of ACK, and otherwise to go to the step S309.

According to the first embodiment of the present invention, in the mobile communications system including the wireless terminals and the base station, the wireless terminal side can solely estimate the quality of the uplink control signals and adequately control the transmit power level according to the estimated quality thereof. On the other hand, the base station side can detect the quality of the uplink control signals from the wireless terminals, decide the adequate transmit power level of the uplink control signals according to the detected quality thereof, and inform the adequate transmit power level thereof to all wireless terminals. Consequently, it becomes possible for the mobile communications system to uniform the transmit power level of all wireless terminals to a correct value.

[The Second Embodiment]

A mobile communications system of the second embodiment of the present invention will be described hereinafter. The feature of the second embodiment is another method of deciding $P_{offset}$ in a base station 20 according to uplink control signals 130 and 131 in FIG. 3.

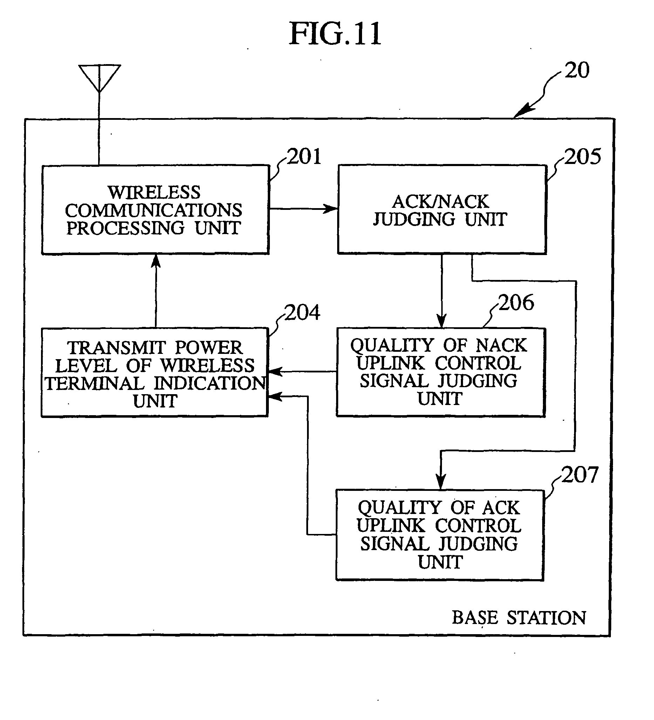

FIG. 11 illustrates a functional scheme of the base station 20. The base station 20 includes a wireless communications processing unit 201, an AKC/NACK judging unit 205, a quality of NACK uplink control signal judging unit 206, a quality of ACK uplink control signal judging unit 207, and a transmit power level of wireless terminal indication unit 204. The wireless communications processing unit 201 carries out wireless communications with wireless terminals 10 and 11. The ACK/NACK judging unit 205 receives uplink control signals and judges the uplink control signals containing ACK/NACK, which are sent from respective wireless terminals 10 and 11. The quality of NACK uplink control signals judging unit 206 judges the quality of the uplink control signals containing NACK information. The quality of ACK uplink control signals judging unit 207 judges the quality of the uplink control signals containing ACK information. The transmit power level of wireless terminal indication unit 204 determines the increment/decrement of a transmit power level of the uplink control signals from the wireless terminals according to the judgment of the quality of NACK uplink control signals and the quality of ACK uplink control signals from respective units 206 and 207.

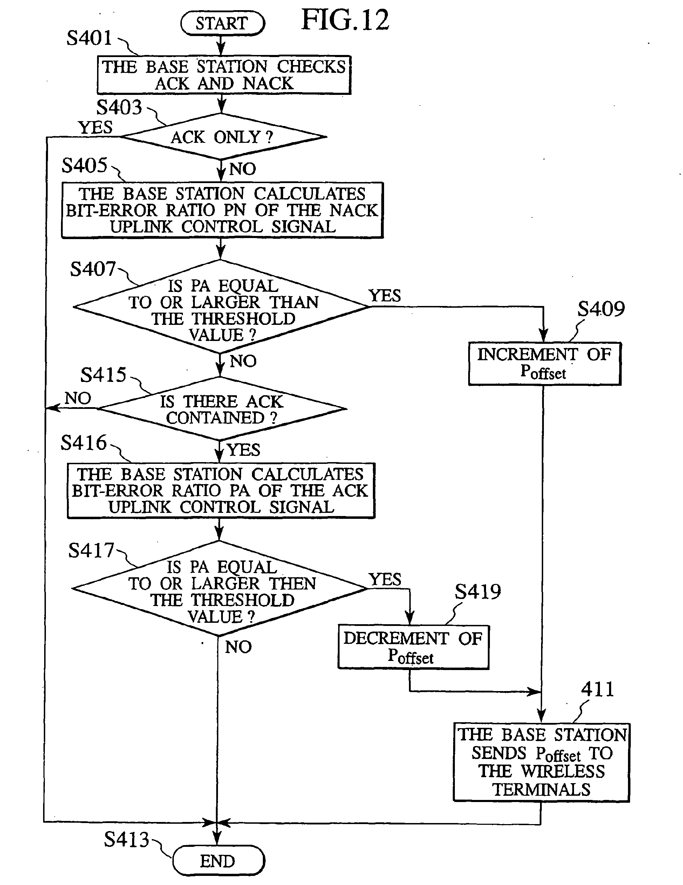

Hereinafter, with reference to a flowchart in FIG. 12, a method of deciding an adequate $P_{offset}$ of uplink control signals that is carried out by the base station 20 according to the received uplink control signals 130 and 131 from the wireless terminals 10 and 11 will be described.

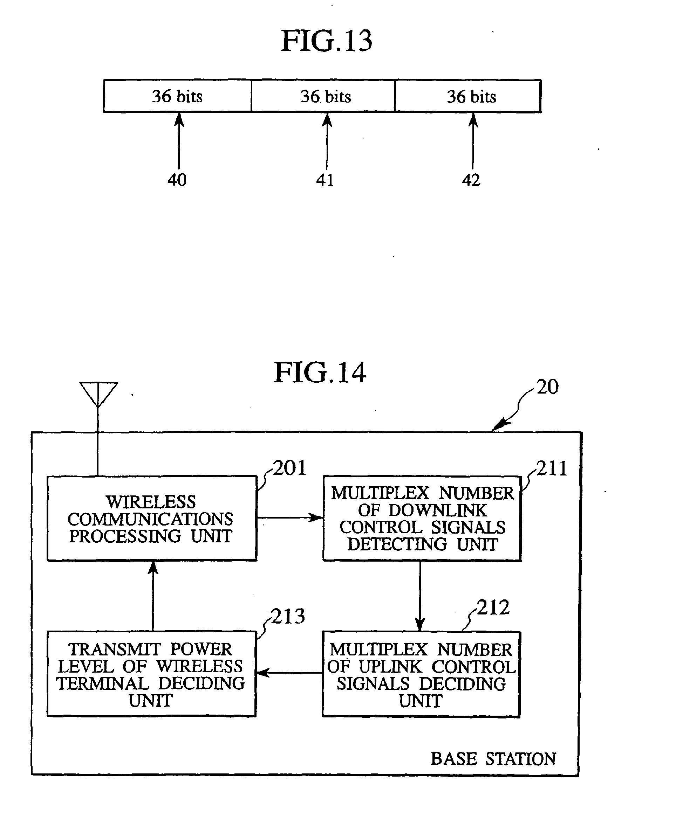

FIG. 13 illustrates a data structure of respective uplink control signals 130 and 131 shown in FIG. 3. A respective uplink control signal comprises an information portion 40 of thirty-six (36) bits reserved for ACK and NACK information, an information portion 41 of thirty (30) bits reserved for signal quality information of respective downlink data signals 120 and 121, and a blank portion 42 of 176 bits. In the information portion 40, a bit string of ACK and a bit string of NACK are set to be different each other at each bit. Here, ACK is set by thirty-six bits of all "0" (zero or low) string and NACK by thirty-six bits of all "1" (one or high) string. Further, the information portion 42 is always set by 176 all "0" bit string. It is allowable to use interleave as bit-handling to each of the information portions 40, 41 and 42 on sending the uplink control signals 130 and 131. The wireless terminal 10 sends the uplink control signal 130 and the wireless terminal 11 sends the uplink control signal 131 as set forth above.

In the step S401, the base station 20 receives the uplink control signals 130 and 131, and judges whether respective uplink control signals is ACK or NACK according to the bit string of the information portion 40. One method of judging ACK or NACK is to inspect every bit of the information portion 40 "0" or "1" and determine the uplink control signal is ACK when nineteen or more bits are "1", and otherwise, determine NACK. Alternatively, it is possible to employ the method of maximum likelihood for a standardized bit string, in which every bit of the information portion 40 is standardized, before judgment of ACK or NACK.

In the step S403, the base station 20 determines to terminate the process when, as the result of judgment in the step S401, all received uplink control signals 130 and 131 are ACK, and otherwise, the base station determines to go to the step S405. Here, it is supposed that the wireless terminal 10 has sent ACK and the wireless terminal 11 has sent NACK.

In the step S405, the base station 20 calculates a bit error ratio PN of the uplink control signal 131, which has been judged NACK. The base station calculates this bit error ratio PN by counting error bits of the information portion 40 or 42. It is applicable by counting error bits of both information portions 40 and 42, or by counting error bits of the information portion 41. It is also applicable to use signal-to-noise ratio SNRn of the uplink control signal instead of the PN.

In the step S407, the base station 20 compares the bit error ratio PN with a predetermined threshold value, or compares the signal-to-noise ratio SNRn with a predetermined threshold value. When the PN is equal to or larger than the threshold value or the SNRn is equal to or smaller than the threshold value, the base station 20 goes to the step S409, and otherwise goes to the step S415. Here, the threshold value for the bit error ratio PN is set to such a value that the uplink control signals 130 and 131 can be correctly received by the base station 20 when the PN is smaller than that value. Similarly, the threshold value for the signal-to-noise ration SNRn is set to such a value that the uplink control signals 130 and 131 can be correctly received by the base station 20 when the SNRn is larger than that value. It is assumed here that the bit error ratio PN of the uplink control signal 131 from the wireless terminal 11 is detected as being larger than the threshold value.

In the step S409, the base station 20 determines to increase the $P_{offset}$. It is possible to set the $P_{offset}$ to be increased by a constant value. Alternatively, it is also possible to set the base station 20 to store a table defining relationship between increment/decrement values and PN values (or SNRn values) in its memory beforehand, and to refer to the table in order to determine an increment value.

In the step S411, the base station 20 sends the $P_{offset}$ to the wireless terminals 10 and 11. The timing of transmission of this value $P_{offset}$ is set for the base station 20 to send periodically or at arbitrary timings by using the annunciation signal 100, the downlink control signals 110 and 111 or the downlink data signals 120 and 121. The wireless terminals 10 and 11 store in their memories the $P_{offset}$ value sent from the base station 20.

The following process will be carried out by the base station 20 when it goes to the step S415 from the step S407 because the PN is not equal to nor larger than the threshold value, or the SNRn is not equal to nor smaller than the threshold value.

In the step S415, the base station 20 goes to the step S416 when at least one ACK signal was found among the received uplink control signals 130 and 131, and otherwise, it terminates the processes. In this case, the base station 20 goes to the step S416 because the wireless terminal 10 is supposed to have sent ACK.

In the step S416, the base station 20 calculates a bit error ratio PA of the uplink control signals, which have been judged ACK. The base station calculates this bit error ratio PA by counting error bits of the information portion 40 or 42. It is applicable by counting error bits of both information portions 40 and 42, or by counting error bits of the information portion 41. It is also applicable to use signal-to-noise ratio SNRa of the uplink control signal instead of the PA.

In the step S417, the base station 20 compares the bit error ratio PA with a predetermined threshold value, or compares the signal-to-noise ratio SNRa with a predetermined threshold value. When the PA is equal to or larger than the threshold value or the SNRa is equal to or smaller than the threshold value, the base station 20 goes to the step S419, and otherwise goes to the step S413. Here, it is assumed that the bit error ratio PA of the uplink control signal 130 from the wireless terminal 10 is detected as being larger than the threshold value.

In the step S419, the base station 20 determines to decrease the $P_{offset}$. It is possible to set the $P_{offset}$ to be decreased by a constant value. Alternatively, it is also possible to set the base station 20 to store a table defining relationship between increment/decrement values and PA values (or SNRa values) in its memory beforehand, and to refer to the table in order to determine a value of decrease. In the step S411, as set forth above, the base station 20 also sends the $P_{offset}$ to the wireless terminals 10 and 11.

For this method of deciding an adequate transmit power level, in the step S401, it is possible to arrange for the wireless terminals 10 and 11 to detect errors of the uplink control signals 130 and 131 and send the error information to the base station 20, and for the base station 20 to receive the error information from the wireless terminals 10 and 11 and correct ACK and NACK bit string before the judgment thereof.

It is also possible to inverse the bit string of ACK and that of NACK. Further, it is possible to differ all threshold values for the bit error ratio PN and PA and for the signal-to-noise ratio SNRn and SNRa, respectively.

According to the second embodiment of the present invention, the wireless terminals judge errors of the uplink control signals and the base station determines the adequate transmit power level of the uplink control signals for NACK according to errors of the uplink control signals. Consequently, it can lessen the degradation of receive quality of the uplink control signals.

Furthermore, the base station measures a wireless signal quality such as the bit error ratio or the signal-to-noise ratio of the uplink control signals and determines the adequate transmit power level of the uplink control signals for NACK according to the measured wireless signal quality. Consequently, the degradation of receive quality of the uplink control signals can be minimized and the load on the wireless terminals for adjustment of the transmit power level of the uplink control signals can be lessened.

Since estimation of the correct information is easy for the information portions 40 and 42, the error measurement of the uplink control signals by using these protions is also easy. Accordingly, by using these information portions for detecting the quality of the uplink control signals, high accuracy of measurement of the quality of the uplink control signals is achievable.

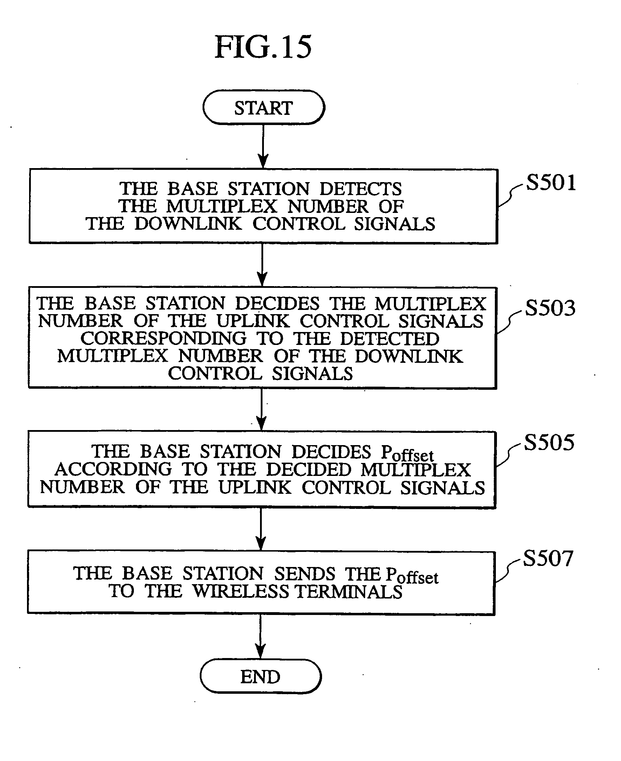

A mobile communications system of an example explained for an understanding of the present invention will be described hereinafter with reference to FIGs. 14 and 15. The scheme of the mobile communications system of the example is the same as that of the example shown in FIG. 1. The feature of the example is a function of a base station 20. The base station 20 includes a wireless communications processing unit 201, a multiplex number of downlink control signals detecting unit 211, a multiplex number of uplink control signals deciding unit 212 and a transmit power level of wireless terminal deciding unit 213. The wireless communications processing unit 201 processes wireless communications with wireless terminal 10 and 11. The multiplex number of downlink control signals detecting unit 211 detects a multiplex number of downlink control signals to be sent out from the base station 20 to the wireless terminals 10 and 11. The multiplex number of uplink control signals deciding unit 212 decides a multiplex number of uplink control signals to be sent from the wireless terminals 10 and 11. The multiplex number of uplink control signals is determined so as to correspond to the detected multiplex number of downlink control signals. The transmit power level of wireless terminal deciding unit 213 calculates a transmit power level $P_{offset}$ of the uplink control signals to be sent from the wireless terminals 10 and 11 according to the multiplex number of uplink control signals that is decided by the multiplex number of uplink control signals deciding unit 212, and sends the $P_{offset}$ value via the wireless communications processing unit 201 to the wireless terminals 10 and 11. The $P_{offset}$ value is sent in the downlink control signals or downlink data signals.

Hereinafter, a method of deciding a transmit power level of uplink control signals carried out in the base station 20 will be described with reference to the flowchart of FIG. 15.

In the step S501, the base station 20 detects the multiplex number of downlink control signals when the signals are being sent out to the wireless terminals.

In the step S503, the base station 20 decides the multiplex number of uplink control signals according to the detected multiplex number of downlink control signals so as to correspond to the detected multiplex number thereof.

In the step S505, the base station 20 calculates a suitable transmit power level $P_{offset}$ of the uplink control signals according to the decided multiplex number of uplink control signals.

In the step S507, the base station 20 sends the newly calculated $P_{offset}$ value to the wireless terminals 10 and 11. The Poffset value will be sent in the downlink control signals or the downlink data signals.

The wireless terminals 10 and 11 receive the $P_{offset}$ value and control the transmit power level of the uplink control signals to fit the indicated $P_{offset}$ value.

According to this example, in the mobile communications system including the wireless terminals 10 and 11 and the base station 20, the base station 20 solely decides the multiplex number of uplink control signals and also decides an adequate transmit power level of the uplink control signals according to the decided multiplex number thereof, and indicates the adequate transmit power level of the uplink control signals to the wireless terminal. Consequently, the wireless terminals 10 and 11 can adequately carry out wireless communications with the base station 20 by merely controlling the transmit power level of the uplink control signals so as to agree with the indicated transmit power level. As a result, the load for adjustment of the transmit power level of the uplink control signals that is required to the wireless terminal side does not increase.

**Claims**

1. A method of deciding a transmit power level carried out by a wireless terminal (10, 11) in a mobile communication system, wherein the wireless terminal (10, 11) receives downlink data signals (120) from a base station (20) operated in the mobile communication system, the method being **characterized by** comprising the steps:

    judging (S207) whether or not the content of the received downlink data signal (120) is sent for the first time from the base station (20);
    judging (S217) whether or not the downlink data signal (120) is received correctly for indication of ACK/NACK in an uplink control signal to the base station;
    estimating the quality of uplink control signals by

• determining (S209) a previous uplink control signal as incorrect when the wireless terminal (10) has not received a downlink data signal (120) containing new content though the previous uplink control signal contained ACK information; by

• determining (S215) a previous uplink control signal as incorrect when the wireless terminal (10) has received a downlink data signal (120) containing new content though the previous uplink control signal contained NACK information; and by

• determining a previous uplink control signal as correct when the previous uplink control signal contained ACK information and the wireless terminal (10) has received a downlink data signal (120) containing new content or when the previous uplink control signal contained NACK information and the wireless terminal (10) has not received a downlink data signal (120) containing new content;

deciding (S225) a transmit power level according to the estimated quality of the uplink control signal for control of a transmit power level of the uplink control signal.

2. A method of deciding a transmit power level in a mobile communications system, in which the system includes a plurality of wireless terminals (10, 11) and a base station (20), the method being **characterized by** comprising the steps of:

(a) a step that the plurality of wireless terminals (10, 11) estimate a quality of an uplink control signal, respectively;

(b) a step that the plurality of wireless terminals (10, 11) inform a degradation of the uplink control signal to the base station (20) when they estimated the degradation thereof, respectively;

(c) a step that the base station (20) decides to increase the transmit power level of the uplink control signal from one of the plurality of wireless terminals (10, 11) when the base station (20) received from one of the plurality of wireless terminals (10, 11) an information that the quality of the uplink control signal NACK for informing an incorrect receipt of a downlink data signal is degraded, whereas the base station (20) decides to decrease the transmit power level of the uplink control signal from one of the plurality of wireless terminals (10, 11) when the base station received from one of the plurality of wireless terminals an information that the quality of the uplink control signal ACK for informing a correct receipt of the downlink data signal is degraded, and

(d) a step that the base station (20) sends an indication value of the decided transmit power level of the uplink control signal to all of the plurality of wireless terminals (10, 11).

3. A wireless terminal receiving downlink data signals (120) from a base station (20) operated in the mobile communication system, the wireless terminal **characterized by** comprising:

means configured to

• judge whether or not the content of the received downlink data signal (120) is sent for the first time from the base station (20); and to

• judge whether or not the downlink data signal (120) is received correctly for indication of ACK/NACK in an uplink control signal to the base station;

a signal quality estimating means (105) configured to estimate the quality of uplink control signals by

• determining (S209) a previous uplink control signal as incorrect when the wireless terminal (10) has not received a downlink data signal (120) containing new content though the previous uplink control signal contained ACK information; by

• determining (S215) a previous uplink control signal as incorrect when the wireless terminal (10) has received a downlink data signal (120) containing new content though the previous uplink control signal contained NACK information; and by

• determining a previous uplink control signal as correct when the previous uplink control signal contained ACK information and the wireless terminal (10) has received a downlink data signal (120) containing new content or when the previous uplink control signal contained NACK information and the wireless terminal (10) has not received a downlink data signal (120) containing new content;

a transmit power level deciding means (106) configured to decide a transmit power level according to the estimated quality of the previous uplink control signal; and

a transmit power control means (104) configured to control a transmit power level of the uplink control signal according to the transmit power level decided by the transmit power level deciding means (106).

**4.** The wireless terminal in accordance with claim 3,
wherein
the signal quality estimating means (105) is configured to estimate the quality of the uplink control signal NACK for informing an incorrect receipt of a downlink data signal from the base station (20) and the quality of the uplink control ACK signal for informing a correct receipt of the downlink data signal; and
the transmit power level deciding means (106) is configured to decide an increment in the transmit power level of the uplink control signal when the signal quality estimation means (105) estimates that the quality of the uplink control signal NACK for informing an incorrect receipt of the downlink data signal is degraded, and is configured to decide a decrement in the transmit power level of the uplink control signal when the signal quality estimation means (105) estimates that the quality of the uplink control signal ACK for informing a correct receipt of the uplink control signal is degraded.

**5.** The wireless terminal in accordance with claim 3,
wherein the signal quality estimating means (105) is configured to estimate the quality of the uplink control signal according to the downlink data signal from the base station (20).

**6.** The wireless terminal in accordance with claim 5,
wherein the signal quality estimating means (105) is configured to decide that the quality of the uplink control signal ACK for informing a correct receipt of the downlink data signal is degraded in a case where the wireless terminal receives the downlink data signal of informing the same message with that was previously received after the wireless terminal sent an uplink control signal ACK for informing a correct receipt of the downlink data signal which was previously received.

**7.** The wireless terminal in accordance with claim 5,
wherein the signal quality estimating means (105) is configured to decide that the quality of the uplink control signal NACK for informing an incorrect receipt of the downlink data signal is degraded in a case where the wireless terminal receives the downlink data signal of informing a different message from that was previously received after the wireless terminal sent an uplink control signal NACK for informing an incorrect receipt of the downlink data signal which was previously received.

**8.** The wireless terminal in accordance with claim 3,
wherein the transmit power level of the uplink control signal is a transmit power level of an uplink control signal NACK for informing an incorrect receipt of a downlink data signal from a base station (20).

**9.** A mobile communications system comprising a plurality of wireless terminals (10, 11) and a base station (20); wherein the system is **characterized in that**
the plurality of wireless terminals (10, 11), respectively, are configured to estimate a quality of uplink control signal and to inform degradation of the quality of the uplink control signals to the base station in a case where one of the respective wireless terminals (10, 11) estimate the degradation of the quality of the uplink control signals; and
the base station (20) is configured to decide to increase a transmit power level of the uplink control signals from each of the wireless terminals (10, 11) when the base station (20) received from one of the wireless terminals (10, 11) an information that the quality of the uplink control signals NACK for informing an incorrect receipt of the downlink data signals is degraded and to decide to decrease the transmit power level of the uplink control signals from each of the wireless terminals (10, 11) when the base station (25) received from one of the wireless terminals (10, 11) an information that the quality of the uplink control signals ACK for informing a correct receipt of the downlink data signals is degraded, and to send an indication value of the transmit power level to all of the plurality of wireless terminals (10, 11).

**Patentansprüche**

**1.** Verfahren zum Entscheiden eines
Übertragungsleistungspegels, ausgeführt von einem Drahtlos-Endgerät (10, 11) in einem Mobilkommunikationssystem, wobei das Drahtlos-Endgerät (10, 11) Downlink-Datensignale (120) von einer Basisstation (20) empfängt, betrieben in dem Mobilkommunikationssystem, wobei das Verfahren **dadurch gekennzeichnet ist, dass** es die Schritte umfasst:

ein Beurteilen (S207), ob der Inhalt des empfangenen Downlink-Datensignals (120) zum ersten Mal von der Basisstation (20) gesendet wird;
ein Beurteilen (S217), ob das Downlink-Datensignal (120) korrekt empfangen wird zur Indikation von ACK/NACK in einem Uplink-Steuerungssignal an die Basisstation;
ein Schätzen der Qualität des Uplink-Steuerungssignals durch

• ein Bestimmen (S209) eines vorherigen Uplink-Steuerungssignals als inkorrekt, wenn das Drahtlos-Endgerät (10) ein Downlink-Datensignal (120) nicht empfangen hat, das neuen Inhalt enthält, obwohl das vorherige Uplink-Steuerungssignal ACK-Information enthielt; durch
• ein Bestimmen (S215) eines vorherigen Uplink-Steuerungssignals als inkorrekt, wenn das Drahtlos-Endgerät (10) ein Downlink-Datensignal (120) empfangen hat, das neuen Inhalt enthält, obwohl das vorherige Uplink-Steuerungssignal NACK-Information enthielt; und durch
• ein Bestimmen eines vorherigen Uplink-Steuerungssignals als korrekt, wenn das vorherige Uplink-Steuerungssignal ACK-Information enthielt und das Drahtlos-Endgerät (10) ein Downlink-Datensignal (120) empfangen hat, das neuen Inhalt enthält, oder wenn das vorherige Uplink-Steuerungssignal NACK-Information enthielt und das Drahtlos-Endgerät (10) ein Downlink-Datensignal (120), das neuen Inhalt enthält, nicht empfangen hat;

ein Entscheiden (S225) eines Übertragungsleistungspegels gemäß der geschätzten Qualität des Uplink-Steuerungssignals zur Steuerung eines Übertragungsleistungspegels des Uplink-Steuerungssignals.

2. Verfahren zum Entscheiden eines
Übertragungsleistungspegels in einem Mobilkommunikationssystem, bei welchem das System eine Vielzahl von Drahtlos-Endgeräten (10, 11) und eine Basisstation (20) umfasst, wobei das Verfahren **dadurch gekennzeichnet ist, dass** es die Schritte umfasst:

(a) einen Schritt, dass die Vielzahl von Drahtlos-Endgeräten (10, 11) eine Qualität eines Uplink-Steuerungssignals jeweils schätzt;
(b) einen Schritt, dass die Vielzahl von Drahtlos-Endgeräten (10, 11) eine Beeinträchtigung des Uplink-Steuerungssignals der Basisstation (20) mitteilt, wenn diese jeweils die Beeinträchtigung davon geschätzt haben;
(c) einen Schritt, dass die Basisstation (20) entscheidet, den Übertragungsleistungspegel des Uplink-Steuerungssignals von einem aus der Vielzahl von Drahtlos-Endgeräten (10, 11) zu erhöhen, wenn die Basisstation (20) von einer aus der Vielzahl von Drahtlos-Endgeräten (10, 11) eine Mitteilung empfängt, dass die Qualität des Uplink-Steuerungssignals NACK zum Mitteilen eines inkorrekten Empfangs eines Downlink-Datensignals beeinträchtigt ist, wobei die Basisstation (20) entscheidet, den Übertragungsleistungspegel des Uplink-Steuerungssignals von einer aus der Vielzahl von Drahtlos-Endgeräten (10, 11) zu senken, wenn die Basisstation von einem aus der Vielzahl von Drahtlos-Endgeräten (10, 11) eine Mitteilung empfangen hat, dass die Qualität des Uplink-Steuerungssignals ACK zum Mitteilen eines korrekten Empfangs des Downlink-Datensignals beeinträchtigt ist, und
(d) einen Schritt, dass die Basisstation (20) einen Indikationswert des entschiedenen Übertragungsleistungspegels des Uplink-Steuerungssignals an alle aus der Vielzahl von Drahtlos-Endgeräten (10, 11) sendet.

3. Drahtlos-Endgerät, das Downlink-Datensignale (120) von einer Basisstation (20) empfängt, betrieben in dem Mobilkommunikationssystem, wobei das Drahtlos-Endgerät **dadurch gekennzeichnet ist, dass** es umfasst:

ein Mittel, das konfiguriert ist

• zu beurteilen, ob der Inhalt des empfangenen Downlink-Datensignals (120) zum ersten Mal von der Basisstation (20) gesendet wird; und
• zu beurteilen, ob das Downlink-Datensignal (120) korrekt empfangen wurde zur Indikation von ACK/NACK in einem Uplink-Steuerungssignal an die Basisstation;

ein Signalqualitätsschätzmittel (105), das konfiguriert ist, die Qualität von Uplink-Steuerungssignalen zu schätzen durch

• ein Bestimmen (S209) eines vorherigen Uplink-Steuerungssignals als inkorrekt, wenn das Drahtlos-Endgerät (10) ein Downlink-Datensignal (120) nicht empfangen hat, das neuen Inhalt enthält, obwohl das vorherige Uplink-Steuerungssignal ACK-Information enthielt; durch
• ein Bestimmen (S215) eines vorherigen Uplink-Steuerungssignals als inkorrekt, wenn das Drahtlos-Endgerät (10) ein Downlink-Datensignal (120) empfangen hat, das neuen Inhalt enthält, obwohl das vorherige Uplink-Steuerungssignal NACK-Information enthielt; und durch

• ein Bestimmen eines vorherigen Uplink-Steuerungssignals als korrekt, wenn das vorherige Uplink-Steuerungssignal ACK-Information enthält und das Drahtlos-Endgerät (10) ein Downlink-Datensignal (120) empfangen hat, das neuen Inhalt enthält, oder wenn das vorherige Uplink-Steuerungssignal NACK-Information enthielt und das Drahtlos-Endgerät (10) ein Downlink-Datensignal (120), das neuen Inhalt enthält, nicht empfangen hat;

ein Übertragungsleistungspegel-Entscheidungsmittel (106), das konfiguriert ist, einen Übertragungsleistungspegel gemäß der geschätzten Qualität des vorherigen Uplink-Steuerungssignals zu entscheiden; und

ein Übertragungsleistungs-Steuerungsmittel (104), das konfiguriert ist, einen Übertragungsleistungspegel des Uplink-Steuerungssignals gemäß dem Übertragungsleistungspegel zu steuern, das durch das Übertragungsleistungspegel-Entscheidemittel (106) entschieden wurde.

4.  Drahtlos-Endgerät gemäß Anspruch 3, wobei
das Signalqualitäts-Schätzmittel (105) konfiguriert ist, die Qualität des Uplink-Steuerungssignals NACK zu schätzen, um einen inkorrekten Empfang eines Downlink-Datensignals von der Basisstation (20) mitzuteilen, und die Qualität des Uplink-Steuerungs-ACK-Signals zum Mitteilen eines korrekten Empfangs des Downlink-Datensignals; und das Übertragungsleistungspegel-Entscheidungsmittel (106) konfiguriert ist, eine Erhöhung des Übertragungsleistungspegels des Uplink-Steuerungssignals zu entscheiden, wenn das Signalqualitätsschätzmittel (105) schätzt, dass die Qualität des Uplink-Steuerungssignals NACK zum Mitteilen eines inkorrekten Empfangs des Downlink-Datensignals beeinträchtigt ist und konfiguriert ist, ein Absenken des Übertragungsleistungspegels des Uplink-Steuerungssignals zu entscheiden, wenn das Signalqualitätsschätzmittel (105) schätzt, dass die Qualität des Uplink-Steuerungssignals ACK zum Mitteilen eines korrekten Empfangs des Uplink-Steuerungssignals beeinträchtigt ist.

5.  Drahtlos-Endgerät gemäß Anspruch 3, wobei das Signalqualitätsschätzmittel (105) konfiguriert ist, die Qualität des Uplink-Steuerungssignals gemäß dem Downlink-Datensignal von der Basisstation (20) zu schätzen.

6.  Drahtlos-Endgerät gemäß Anspruch 5, wobei das Signalqualitätsschätzmittel (105) konfiguriert ist, zu entscheiden, dass die Qualität des Uplink-Steuerungssignals ACK zum Mitteilen eines korrekten Empfangs des Downlink-Datensignals beeinträchtigt ist in einem Fall, in welchem das Drahtlos-Endgerät das Downlink-Datensignal empfängt, das dieselbe Nachricht mitteilt, die zuvor empfangen wurde, nachdem das Drahtlos-Endgerät ein Uplink-Steuerungssignal ACK zum Mitteilen eines korrekten Empfangs des Downlink-Datensignals gesendet hat, welches zuvor empfangen wurde.

7.  Drahtlos-Endgerät gemäß Anspruch 5, wobei das Signalqualitätsschätzmittel (105) konfiguriert ist, zu entscheiden, dass die Qualität des Uplink-Steuerungssignals NACK zum Mitteilen eines inkorrekten Empfangs des Downlink-Datensignals beeinträchtigt ist in einem Fall, in welchem das Drahtlos-Endgerät das Downlink-Datensignal empfängt, das eine andere Nachricht mitteilt, als die, die zuvor empfangen wurde, nachdem das Drahtlos-Endgerät ein Uplink-Steuerungssignal NACK gesendet hat, um einen inkorrekten Empfang des Downlink-Datensignals mitzuteilen, welches zuvor empfangen wurde.

8.  Drahtlos-Endgerät gemäß Anspruch 3, wobei der Übertragungsleistungspegel des Uplink-Steuerungssignals ein Übertragungsleistungspegel eines Uplink-Steuerungssignals NACK ist zum Mitteilen eines inkorrekten Empfangs eines Downlink-Datensignals von einer Basisstation (20).

9.  Mobilkommunikationssystem, umfassend eine Vielzahl von Drahtlos-Endgeräten (10, 11) und eine Basisstation (20); wobei das System **dadurch gekennzeichnet ist, dass**
die Vielzahl von Drahtlos-Endgeräten (10, 11) jeweils konfiguriert sind, eine Qualität eines Uplink-Steuerungssignals zu schätzen und eine Beeinträchtigung der Qualität des Uplink-Steuerungssignals an die Basisstation mitzuteilen in einem Fall, in welchem eines der jeweiligen Drahtlos-Endgeräte (10, 11) die Beeinträchtigung der Qualität der Uplink-Steuerungssignale schätzt; und
die Basisstation (20) konfiguriert ist, zu entscheiden, einen Übertragungsleistungspegel der Uplink-Steuerungssignale von jedem der Drahtlos-Endgeräte (10, 11) zu erhöhen, wenn die Basisstation (20) von einem der Drahtlos-Endgeräte (10, 11) eine Mitteilung empfangen hat, dass die Qualität des Uplink-Steuerungssignals NACK zum Mitteilen eines inkorrekten Empfangs der Downlink-Datensignale beeinträchtigt ist und zu entscheiden, den Übertragungsleistungspegel der Uplink-Steuerungssignale von jedem der Drahtlos-Endgeräte (10, 11) zu senken, wenn die Basisstation (25) von einem der Drahtlos-Endgeräte (10, 11) eine Mitteilung empfangen hat, dass die Qualität der Uplink-Steuerungssignale ACK zum Mitteilen eines korrekten Empfangs der Downlink-Datensignale beeinträchtigt ist, und einen Indikationswert des Übertragungsleistungspegels an alle von der Vielzahl von Drahtlos-Endgeräten (10, 11) zu senden.

**Revendications**

1. Procédé de décision d'un niveau de puissance d'émission effectuée par un terminal sans fil (10, 11) dans un système de communication mobile, dans lequel le terminal sans fil (10, 11) reçoit des signaux de données de liaison descendante (120) d'une station de base (20) mise en oeuvre dans le système de communication mobile, le procédé étant **caractérisé** comme comprenant les étapes de :

   jugement (S207) si oui ou non le contenu du signal de données de liaison descendante reçu (120) est envoyé pour la première fois de la station de base (20) ;
   jugement (S217) si oui ou non le signal de données de liaison descendante (120) est reçu correctement pour l'indication d'ACK / NACK dans un signal de commande de liaison montante à la station de base ;
   estimation de la qualité de signaux de commande de liaison montante par

   • détermination (S209) d'un signal de commande de liaison montante précédent comme incorrect lorsque le terminal sans fil (10) n'a pas reçu un signal de données de liaison descendante (120) contenant du nouveau contenu bien que le signal de commande de liaison montante précédent ait contenu de l'information ACK ; par
   • détermination (S215) d'un signal de commande de liaison montante précédent comme incorrect lorsque le terminal sans fil (10) a reçu un signal de données de liaison descendante (120) contenant un nouveau contenu bien que le signal de commande de liaison montante précédent ait contenu de l'information NACK ; et par
   • détermination d'un signal de commande de liaison montante précédent comme correct lorsque le signal de commande de liaison montante précédent contenait une information ACK et que le terminal sans fil (10) a reçu un signal de données de liaison descendante (120) contenant un nouveau contenu ou lorsque le signal de commande de liaison montante précédent contenait une information NACK et que le terminal sans fil (10) n'a pas reçu un signal de données de liaison descendante (120) contenant du nouveau contenu ;

   décision (S225) d'une puissance de niveau d'émission selon la qualité estimée du signal de commande de liaison montante pour la commande d'un niveau de puissance d'émission du signal de commande de liaison montante.

2. Procédé de décision d'une puissance de niveau d'émission dans un système de communications mobile, dans lequel le système inclut une pluralité de terminaux sans fil (10, 11) et une station de base (20), le procédé étant **caractérisé** comme comprenant les étapes suivantes :

   (a) une étape en ce que la pluralité de terminaux sans fil (10, 11) estiment respectivement une qualité d'un signal de commande de liaison montante ;
   (b) une étape en ce que la pluralité de terminaux sans fil (10, 11) informent la station de base (20) d'une dégradation du signal de commande de liaison montante quand ils ont respectivement estimé la dégradation de celui-ci ;
   (c) une étape en ce que la station de base (20) décide d'augmenter le niveau de puissance d'émission du signal de commande de liaison montante à partir d'un terminal de la pluralité de terminaux sans fil (10, 11) lorsque la station de base (20) a reçu d'un terminal de la pluralité de terminaux sans fil (10, 11) une information en ce que la qualité du signal de commande de liaison montante NACK, pour informer d'une réception incorrecte d'un signal de données de liaison descendante, est dégradée, tandis que la station de base (20) décide de diminuer le niveau de puissance d'émission du signal de commande de liaison montante en provenance d'un terminal de la pluralité de terminaux sans fil (10, 11) lorsque la station de base a reçu d'un terminal de la pluralité de terminaux sans fil une information en ce que la qualité du signal de commande de liaison montante ACK, pour informer d'une réception correcte du signal de données de liaison descendante, est dégradée, et
   (d) une étape en ce que la station de base (20) envoie une valeur d'indication du niveau de puissance d'émission décidé du signal de commande de liaison montante à tous les terminaux de la pluralité de terminaux sans fil (10, 11).

**3.** Terminal sans fil recevant des signaux de données de liaison descendante (120) d'une station de base (20) mise en oeuvre dans le système de communication mobile, le terminal sans fil étant **caractérisé** comme comprenant :

un moyen configuré pour

• juger si oui ou non le contenu du signal de données de liaison descendante reçu (120) est envoyé pour la première fois de la station de base (20) ; et pour
• juger si oui ou non le signal de données de liaison descendante (120) est reçu correctement pour l'indication d'ACK / NACK dans un signal de commande de liaison montante à la station de base ;

un moyen d'estimation de qualité de signal (105) configuré pour évaluer la qualité de signaux de commande de liaison montante par

• détermination (S209) d'un signal de commande de liaison montante précédent comme incorrect lorsque le terminal sans fil (10) n'a pas reçu un signal de données de liaison descendante (120) contenant du nouveau contenu bien que le signal de commande de liaison montante précédent ait contenu de l'information ACK ; par
• détermination (S215) d'un signal de commande de liaison montante précédent comme incorrect lorsque le terminal sans fil (10) a reçu un signal (120) de données de liaison descendante contenant du nouveau contenu bien que le signal de commande de liaison montante précédent ait contenu de l'information NACK ; et par
• détermination d'un signal de commande de liaison montante précédent comme correct lorsque le signal de commande de liaison montante précédent contenait de l'information ACK et que le terminal sans fil (10) a reçu un signal (120) de données de liaison descendante contenant du nouveau contenu ou lorsque le signal de commande de liaison montante précédent contenait de l'information NACK et que le terminal sans fil (10) n'a pas reçu un signal de données de liaison descendante (120) contenant du nouveau contenu ;

un moyen de décision de niveau de puissance d'émission (106) configuré pour décider d'un niveau de puissance d'émission selon la qualité estimée du signal de commande de liaison montante précédent ; et
un moyen de commande de puissance d'émission (104) configuré pour commander un niveau de puissance d'émission du signal de commande de liaison montante selon le niveau de puissance d'émission décidé par le moyen de décision de niveau de puissance d'émission (106).

**4.** Terminal sans fil selon la revendication 3, dans lequel
le moyen d'estimation de qualité de signal (105) est configuré pour évaluer la qualité du signal de commande de liaison montante NACK pour informer d'une réception incorrecte d'un signal de données de liaison descendante de la station de base (20) et la qualité du signal ACK de commande de liaison montante pour informer d'une réception correcte du signal de données de liaison descendante ; et
le moyen de décision de niveau de puissance d'émission (106) est configuré pour décider d'un incrément dans le niveau de puissance d'émission du signal de commande de liaison montante lorsque le moyen d'estimation de qualité de signal (105) évalue que la qualité du signal de commande de liaison montante NACK, pour informer d'une réception incorrecte du signal de données de liaison descendante, est dégradée, et est configuré pour décider d'un décrément dans le niveau de puissance d'émission du signal de commande de liaison montante lorsque le moyen d'évaluation de qualité de signal (105) évalue que la qualité du signal de commande de liaison montante ACK, pour informer d'une réception correcte du signal de commande de liaison montante, est dégradée.

**5.** Terminal sans fil selon la revendication 3, dans lequel le moyen d'estimation de qualité de signal (105) est configuré pour estimer la qualité du signal de commande de liaison montante selon le signal de données de liaison descendante de la station de base (20).

**6.** Terminal sans fil selon la revendication 5, dans lequel le moyen d'évaluation de qualité de signal (105) est configuré pour décider que la qualité du signal de commande de liaison montante ACK, pour informer d'une réception correcte du signal de données de liaison descendante, est dégradée dans un cas où le terminal sans fil reçoit le signal de données de liaison descendante d'information du même message que celui qui a été précédemment reçu après que le terminal sans fil a envoyé un signal de commande de liaison montante ACK pour informer d'une réception correcte du signal de données de liaison descendante qui a été précédemment reçu.

**7.** Terminal sans fil selon la revendication 5, dans lequel le moyen d'évaluation de qualité de signal (105) est configuré pour décider que la qualité du signal de commande de liaison montante NACK, pour informer d'une réception incorrecte du signal de données de liaison descendante, est dégradée dans un cas où le terminal sans fil reçoit le signal de données de liaison descendante d'information d'un message différent de celui qui a été précédemment reçu après que le terminal sans fil a envoyé un signal de commande de liaison montante NACK pour informer d'une réception incorrecte du signal de données de liaison descendante qui a été précédemment reçu.

8. Terminal sans fil selon la revendication 3, dans lequel le niveau de puissance d'émission du signal de commande de liaison montante est un niveau de puissance d'émission d'un signal de commande de liaison montante NACK pour informer d'une réception incorrecte d'un signal de données de liaison descendante d'une station de base (20).

9. Système de communications mobile comprenant une pluralité de terminaux sans fil (10, 11) et une station de base (20) ; dans lequel le système est **caractérisé en ce que**
   la pluralité de terminaux sans fil (10, 11) sont respectivement configurés pour estimer une qualité de signal de commande de liaison montante et pour informer la station de base de la dégradation de la qualité des signaux de commande de liaison montante dans un cas où un des terminaux sans fil respectifs (10, 11) estime la dégradation de la qualité des signaux de commande de liaison montante ; et
   la station de base (20) est configurée pour décider d'augmenter un niveau de puissance d'émission des signaux de commande de liaison montante provenant de chacun des terminaux sans fil (10, 11) lorsque la station de base (20) a reçu d'un des terminaux sans fil (10, 11) une information que la qualité des signaux de commande de liaison montante NACK, pour informer d'une réception incorrecte des signaux de données de liaison descendante, est dégradée et pour décider de diminuer le niveau de puissance d'émission des signaux de commande de liaison montante de chacun des terminaux sans fil (10, 11) lorsque la station de base (25) a reçu d'un des terminaux sans fil (10, 11) une information **en ce que** la qualité des signaux de commande de liaison montante ACK, pour informer d'une réception correcte des signaux de données de liaison descendante, est dégradée et pour envoyer une valeur d'indication du niveau de puissance d'émission à tous les terminaux de la pluralité de terminaux sans fil (10, 11).

# FIG.1

1

COMMUNICATIONS
NETWORK

30

WIRELESS
CONTROLLER

20

BASE
STATION

10

WIRELESS
TERMINAL

11

WIRELESS
TERMINAL

# FIG.2

10,11

WIRELESS COMMUNICATIONS PROCESSING UNIT — 101

MULTIPLEX NUMBER OF UPLINK CONTROL SIGNALS DECIDING UNIT — 102

TRANSMIT POWER LEVEL OF UPLINK CONTROL SIGNAL CONTROL UNIT — 104

TRANSMIT POWER LEVEL OF UPLINK CONTROL SIGNAL DECIDING UNIT — 103

WIRELESS TERMINAL

# FIG.3

| | FRAME 1 | FRAME 2 | FRAME 3 | FRAME 4 |
|---|---|---|---|---|

BASE STATION 20

WIRELESS TERMINAL 10

WIRELESS TERMINAL 11

TIME SLOT NUMBER

1 3 5 7 9 11 13 15   1 3 5 7 9 11 13 15   1 3 5 7 9 11 13 15   1 3 5 7 9

130

131

EP 1 385 275 B1

**FIG.4**

START

S101 — DOSE THE WIRELESS TERMINAL RECEIVE THE DOWNLINK CONTROL SIGNAL ADDRESSED TO ITSELF? — NO

YES

S103 — THE WIRELESS TERMINAL COUNTS THE NUMBER OF OTHER DOWNLINK CONTROL SIGNALS SENT IN THE SAME TIME SLOT

S105 — THE WIRELESS TERMINAL RECEIVES THE DOWNLINK DATA SIGNAL IN THE SPECIFIED TIME SLOT BY THE DOWNLINK CONTROL SIGNAL

S107 — DOES THE WIRELESS TERMINAL RECEIVE THE DOWNLINK DATA SIGNAL CORRECTLY? — NO

YES

S117 — THE WIRELESS TERMINAL ADDS ACK ON THE UPLINK CONTROL SIGNAL

S119 — THE WIRELESS TERMINAL CALCULATES PROPAGATION ATTENUATION $L_{P\text{-}CCPCH}$ JUST BEFORE SENDING OF THE UPLINK CONTROL SIGNAL

S121 — THE WIRELESS TERMINAL CALCULATES THE TRANSMIT POWER LEVEL OF THE UPLINK CONTROL SIGNAL $P_{ACK}$

S123 — THE WIRELESS TERMINAL SENDS THE UPLINK CONTROL SIGNAL

END

S109 — THE WIRELESS TERMINAL ADDS NACK ON THE UPLINK CONTROL SIGNAL

S111 — THE WIRELESS TERMINAL CALCULATES PROPAGATION ATTENUATION $L_{P\text{-}CCPCH}$ JUST BEFORE SENDING THE UPLINK SIGNAL

S113 — THE WIRELESS TERMINAL CALCULATES $P_{10}(U)$ ACCORDING TO THE NUMBER OF OTHER DOWNLINK CONTROL SIGNALS U

S115 — THE WIRELESS TERMINAL CALCULATES THE TRANSMIT POWER LEVEL OF THE UPLINK CONTROL SIGNAL $P_{NACK}$

## FIG.5

10,11

| WIRELESS COMMUNICATIONS PROCESSING UNIT | 101 | QUALITY OF UPLINK CONTROL SIGNAL ESTIMATION UNIT | 105 |

TRANSMIT POWER LEVEL OF UPLINE CONTROL SIGNAL CONTROL UNIT — 104

TRANSMIT POWER LEVEL OF UPLINK CONTROL SIGNAL DECIDING UNIT — 106

WIRELESS TERMINAL

## FIG.6

20

WIRELESS COMMUNICATIONS PROCESSING UNIT — 201

ERROR OF UPLINK CONTROL SIGNAL CORRECTION UNIT — 202

TRANSMIT POWER LEVEL OF WIRELESS TERMINAL INDICATION UNIT — 204

ERROR OF UPLINK NACK SIGNAL JUDGING UNIT — 203

BASE STATION

# FIG.7A

```
START
```

S201
DOES A WIRELESS TERMINAL RECEIVE THE DOWNLINK CONTROL SIGNAL? — NO

↓ YES

S203
THE WIRELESS TERMINAL RECEIVES THE DOWNLINK DATA SIGNAL IN THE TIME SLOT DESIGNATED BY THE DOWNLINK CONTROL SIGNAL

S205
DID THE WIRELESS TERMINAL SEND ACK IN THE PREVIOUS SIGNAL? — YES

↓ NO

S207
DID THE WIRELESS TERMINAL RECEIVE THE NEW DATA? — YES

↓ NO

S211
DID THE WIRELESS TERMINAL SEND NACK IN THE PREVIOUS SIGNAL? — YES

NO

S213
DID THE WIRELESS TERMINAL RECEIVE THE NEW DATA? — NO

↓ YES

S215
THE WIRELESS TERMINAL ANNOUNCES ERROR OF RECEPTION OF NACK

S209
THE WIRELESS TERMINAL ANNOUNCES ERROR OF RECEPTION OF ACK

A

EP 1 385 275 B1

# FIG.7B

(A)

**S217** — DID THE WIRELESS TERMINAL RECEIVE THE DOWNLINK DATA SIGNAL CORRECTLY?

**NO** →

↓ **YES**

**S229** — THE WIRELESS TERMINAL ADDS ACK TO THE UPLINK CONTROL SIGNAL

**S229** — THE WIRELESS TERMINAL ADDS NACK TO THE UPLINK CONTROL SIGNAL

**S231** — THE WIRELESS TERMINAL CALCULATES $L_{P\text{-}CCPCH}$ OF THE ANNUNCIATION SIGNAL JUST BEFORE SENDING THE UPLINK CONTROL SIGNAL

**S231** — THE WIRELESS TERMINAL CALCULATES $L_{P\text{-}CCPCH}$ OF THE ANNUNCIATION SIGNAL JUST BEFORE SENDING THE UPLINK CONTROL SIGNAL

**S225** — THE WIRELESS TERMINAL CALCULATES THE TRANSMIT POWER LEVEL $P_{ACK}$ OF THE UPLINK CONTROL SIGNAL

**S225** — THE WIRELESS TERMINAL CALCULATES THE TRANSMIT POWER LEVEL $P_{NACK}$ OF THE UPLINK CONTROL SIGNAL

THE WIRELESS TERMINAL SENDS THE UPLINK CONTROL SIGNAL

( END )

# FIG.8

START

S301 — DOES THE BASE STATION RECEIVE ERROR INFORMATION OF THE UNLINK CONTROL SIGNAL ? — NO

↓ YES

S303 — AS THE RESULT OF ERROR CORRECTION, ARE ALL RECEIVED UPLINK CONTROL SIGNALS ACK? — YES

↓ NO

S305 — ARE THERE ERRORS IN SOME UPLINK CONTROL SIGNALS OF NACK? — YES

↓ NO

S309 — THE BASE STATION DETERMINES TO DECREASE $P_{offset}$ OF THE UPLINK CONTROL SIGNAL

S307 — THE BASE STATION DETERMINES TO INCREASE $P_{offset}$ OF THE UPLINK CONTROL SIGNAL

S311 — THE BASE STATION DISTRIBUTES $P_{offset}$ INDICATION VALUE TO ALL WIRELESS TERMINALS

S313 — END

# FIG.9

WIRELESS
TERMINAL 11

BASE
STATION 20

WIRELESS
TERMINAL 10

WIRELESS
TERMINAL 1X

DOWNLINK CONTROL SIGNAL
DESIGNATED TO WIRELESS
TERMINAL 10

Q3

Q1

JUDGMENT OF TIME SLOT
NUMBER OF THE
DOWNLINK DATA
SIGNAL

DOWNLINK DATA SIGNAL

Q7

Q5

JUDGMENT OF RECEIVE
ERROR OF THE UPLINK
CONTROL SIGNAL

ANNUNCIATION OF RECEIVE
ERROR OF NACK/ACK
CONTAINED IN THE UPLINK
CONTROL SIGNAL

Q21

JUDGMENT OF
INCREMENT/DECREMENT
OF $P_{offset}$

Q9

ANNUNCIATION OF
INCREMENT/DECREMENT
OF $P_{offset}$

Q23

Q11

DETERMINATION OF THE
TRANSMIT POWER LEVEL
OF THE UPLINK CONTROL
SIGNAL

UPLINK CONTROL SIGNAL

Q13

28

# FIG.10

| | NACK/ACK OF THE PREVIOUS UPLINK CONTROL SIGNAL | INCORRECT RECEPTION OF THE UPLINK CONTROL SIGNAL |
|---|---|---|
| WIRELESS TERMINAL 10 | NACK | YES |
| WIRELESS TERMINAL 11 | ACK | NO |

# FIG.11

# FIG.12

START

S401 — THE BASE STATION CHECKS ACK AND NACK

S403 — ACK ONLY ?

YES

NO

S405 — THE BASE STATION CALCULATES BIT-ERROR RATIO PN OF THE NACK UPLINK CONTROL SIGNAL

S407 — IS PA EQUAL TO OR LARGER THAN THE THRESHOLD VALUE ?

YES

NO

S409 — INCREMENT OF $P_{offset}$

S415 — IS THERE ACK CONTAINED ?

NO

YES

S416 — THE BASE STATION CALCULATES BIT-ERROR RATIO PA OF THE ACK UPLINK CONTROL SIGNAL

S417 — IS PA EQUAL TO OR LARGER THEN THE THRESHOLD VALUE ?

YES

NO

S419 — DECREMENT OF $P_{offset}$

411 — THE BASE STATION SENDS $P_{offset}$ TO THE WIRELESS TERMINALS

S413 — END

# FIG.13

| 36 bits | 36 bits | 36 bits |
|---------|---------|---------|

40          41          42

# FIG.14

20

WIRELESS COMMUNICATIONS PROCESSING UNIT — 201

MULTIPLEX NUMBER OF DOWNLINK CONTROL SIGNALS DETECTING UNIT — 211

TRANSMIT POWER LEVEL OF WIRELESS TERMINAL DECIDING UNIT — 213

MULTIPLEX NUMBER OF UPLINK CONTROL SIGNALS DECIDING UNIT — 212

BASE STATION

# FIG.15

START

THE BASE STATION DETECTS
THE MULTIPLEX NUMBER OF
THE DOWNLINK CONTROL SIGNALS ⟶ S501

THE BASE STATION DECIDES THE MULTIPLEX
NUMBER OF THE UPLINK CONTROL SIGNALS
CORRESPONDING TO THE DETECTED
MULTIPLEX NUMBER OF THE DOWNLINK
CONTROL SIGNALS ⟶ S503

THE BASE STATION DECIDES $P_{offset}$
ACCORDING TO THE DECIDED MULTIPLEX
NUMBER OF THE UPLINK CONTROL SIGNALS ⟶ S505

THE BASE STATION SENDS THE $P_{offset}$
TO THE WIRELESS TERMINALS ⟶ S507

END

**EP 1 385 275 B1**

## REFERENCES CITED IN THE DESCRIPTION

### Patent documents cited in the description

- JP 2002 A
- JP 214282 A

- WO 9858461 A